# EUROPÄISCHE PATENTSCHRIFT

(11) **EP 4 092 850 B1**
(45) Veröffentlichungstag und Bekanntmachung des Hinweises auf die Patenterteilung: **05.06.2024**
(21) Anmeldenummer: 22184655.3
(22) Anmeldetag: 31.07.2018
(51) Int. Cl.: H02G 1/12

(54) **VERFAHREN UND VORRICHTUNG ZUM ENTFERNEN EINER KABELFOLIE**
METHOD AND DEVICE FOR REMOVING A CABLE FOIL
PROCÉDÉ ET DISPOSITIF D'ENLÈVEMENT D'UNE FEUILLE DE CÂBLE

(30) Priorität: 14.08.2017 DE 102017118445
(43) Veröffentlichungstag der Anmeldung: 23.11.2022
(62) Teilanmeldung aus: 18186463.8
(73) Patentinhaber: Metzner Maschinenbau GmbH, 89231 Neu-Ulm (DE)
(72) Erfinder: Sorg, Manfred, 89079 Ulm (DE)
(74) Vertreter: Lorenz, Matthias

(56) Entgegenhaltungen:
- EP-A1- 2 747 225
- EP-A1- 2 871 736
- WO-A1-2015/125129
- CN-U- 204 858 248
- DE-A1- 4 036 011
- DE-A1-102009 000 547
- DE-A1-102014 105 791
- DE-A1-102015 106 129
- DE-B- 1 111 689
- JP-A- H0 622 425
- JP-A- 2005 327 641
- US-A- 5 072 632
- US-A- 5 142 121
- Phil Crockett: "COAX F-CONNECTOR - INSTALLATION", , 20 January 2015 (2015-01-20), XP093094843, Retrieved from the Internet: URL:https://www.youtube.com/watch?v=5_9H3d W9C6k [retrieved on 2023-10-25]

## Beschreibung

Die Erfindung betrifft ein Verfahren zum automatisierten Entfernen einer Kabelfolie von einem zu bearbeitenden Kabelabschnitt eines elektrischen Kabels.

Die Erfindung betrifft auch eine Vorrichtung zum automatisierten Entfernen einer Kabelfolie von einem zu bearbeitenden Kabelabschnitt eines elektrischen Kabels.

Die Erfindung betrifft ferner ein System zum Konfektionieren von elektrischen Kabeln.

In elektrischen Kabeln werden mitunter Kabelfolien zur elektromagnetischen Abschirmung, zum mechanischen Schutz und/oder zum Feuchtigkeitsschutz weiterer Komponenten des Kabels, beispielsweise zum Schutz von elektrischen Leitern, Kabelschirmgeflechten und Dielektrika, verwendet. Beispielsweise ist es bei elektrischen Kabeln häufig wichtig, dass eine Isolierschicht, welche den elektrischen Leiter isoliert, gegen Feuchtigkeit geschützt ist. Bereits Feuchtigkeit in Form von Dampf kann die Isolierung schädigen. Ferner kann eine Kabelfolie als Trennschicht zwischen einem Kabelschirmgeflecht und dem Kabel(außen)mantel vorgesehen sein, wodurch der Kabelmantel beim einem Abisolierprozess leichter - oder überhaupt erst - abziehbar ist, da sich der Kabelmantel beim Abziehen andernfalls in einem darunter befindlichen Kabelschirmgeflecht mechanisch verhaken bzw. festsetzen kann.

Je nach Einsatz können die Kabelfolien auch als "Schirmfolien", "Isolationsfolien" oder "Schutzfolien" bezeichnet werden. Der vorliegend gewählte Begriff "Kabelfolien" soll alle Einsatzgebiete abdecken.

Derartige Kabelfolien können aus einem einzigen Grundmaterial, z. B. aus einer Schicht aus einem isolierenden Material, beispielsweise einem Kunststoff, oder aus einer Schicht aus einem elektrisch leitfähigen Material, beispielsweise einem Metall, bestehen. Häufig werden aber auch Verbundfolien verwendet, die aus wenigstens zwei Schichten, insbesondere aus wenigstens zwei Schichten aus unterschiedlichen Grundmaterialien bestehen. Zum Hintergrund wird beispielhaft auf die DE 10 2015 106 129 A1 verwiesen, die eine einseitige Schmelz-Aluminium-Kunststoff-Verbundfolie und deren Herstellungsverfahren beschreibt. Außerdem wird auf die DE 100 26 714 A1 verwiesen, die eine halogenfreie Verbundfolie, ein Verfahren zu ihrer Herstellung und ihre Verwendung zur Herstellung flexibler Flachbandkabel beschreibt.

Wenn ein elektrisches Kabel mit einer Kabelfolie automatisiert konfektioniert und in diesem Prozess zumindest teilweise abisoliert werden soll, ist es häufig erforderlich, die Kabelfolie an den entsprechenden Stellen im Laufe des Abisolierprozesses zu entfernen. Da häufig reißfeste bzw. mechanisch robuste Folien eingesetzt werden, ist dies in der Regel aufwändig und lediglich durch manuellen Einsatz überhaupt möglich. Der Vorgang des Entfernens der Kabelfolie ist zeitraubend und verhindert eine vollautomatisierte Kabelkonfektionierung. Zur Vereinfachung des Abisolierens bzw. Entfernens der Kabelfolie wird in der WO 2007/104402 A1 vorgeschlagen, das Kabel bzw. die Kabelfolie bereits so herzustellen, dass die Kabelfolie anschließend leichter entfernt werden kann. Dabei wird die Folie mit einer Anzahl zueinander beabstandeter Prägungen hergestellt, die infolge eine Schwächung des Folienmaterials bewirken. Ein manuelles Abisolieren kann hierdurch erleichtert werden. Nachteilig ist allerdings, dass die Kabelfolie dann im Bereich des gesamten Kabels, also auch im Bereich des Kabels, in dem die Kabelfolie nicht entfernt werden soll, mechanisch geschwächt ist. Die absichtliche Schwächung des Folienmaterials kann somit kontraproduktiv sein. Ferner ist der Herstellungsprozess der Kabelfolie deutlich aufwändiger, da die Prägungen auch derart eingebracht werden müssen, dass diese die Folie möglichst nicht durchdringen, da zumeist der zuvor genannte Feuchtigkeitsschutz gewährleistet sein muss.

Ein Problem, insbesondere beim automatisierten Entfernen der Folie, ist, dass die Folie naturgemäß im Vergleich zu den restlichen Komponenten des Kabels sehr dünn ist. Bei dem Versuch die Kabelfolie zu durchschneiden lässt es sich in der Praxis aus diesem Grund nur schwer vermeiden, dass auch darunterliegende Komponenten des Kabels zumindest oberflächlich angeschnitten bzw. angeritzt und damit beschädigt werden. Ein besonderes Problem beim Einschneiden in die Kabelfolie ist dabei, dass das Kabel toleranzbedingt bzw. in der Praxis häufig keinen gleichmäßig kreisförmigen Querschnitt aufweist und die Tiefe des Schnittes demnach variieren kann. Eine Beschädigung einer Isolationsschicht durch einen ungewollt zu tief gesetzten Schnitt kann die Durchschlagsfestigkeit und mechanische Robustheit bzw. Widerstandsfähigkeit der Isolationsschicht gefährden. Analog kann die Leitfähigkeit und mechanische Robustheit, insbesondere Brüchigkeit, elektrischer Leiter bei einer Beschädigung herabgesetzt sein. Insbesondere ein übliches Kabelschirmgeflecht aus - z. B. mit Zinn - beschichtetem Kupfer kann hierfür anfällig sein. Das beschädigte Kabelschirmgeflecht kann in Folge bei Beanspruchung des Kabels an den beschädigten Stellen brechen, wodurch die Masseleitung und elektromagnetische Dichtigkeit des Kabels gefährdet sein können.

Zur Vermeidung des Problems der Beschädigung von Komponenten des Kabels unterhalb der Kabelfolie bei einem Schneiden der Kabelfolie wird in der DE 10 2004 047 384 B3 ein spezielles Kabel offenbart, bei dem eine Füllschicht unterhalb der Kabelfolie vorgesehen ist, wobei bei einem Durchschneiden der Folie die Messerklinge nur die Füllschicht, sozusagen als "Opfermaterial", schädigt. Ein derart aufgebautes Kabel kann anschließend mit einfachen Abisolierwerkzeugen für eine Konfektionierung vorbereitet werden. Ein entsprechend ausgestattetes Kabel ist allerdings in der Herstellung aufwändig und somit teuer, weist ein erhöhtes Gewicht und einen vergrößerten Umfang auf, wodurch es in der Praxis insgesamt unpraktisch erscheint.

Eine geeignete Lösung zum Entfernen der Kabelfolie im Zuge eines automatisierten Prozesses ist dem gesamten bisher bekannten Stand der Technik nicht zu entnehmen. Zwar offenbart die gattungsgemäße EP 3 089 294 A1 eine Kabelbearbeitungseinrichtung und ein Verfahren zum Entfernen einer Schirmfolie von einem geschirmten, mehradrigen Rundkabel, die Schirmfolie wird allerdings in dieser Einrichtung wiederum mit einem Messer geschnitten. Dabei wird versucht so zu schneiden, dass keine Beschädigung der darunterliegenden Isolation oder Kabeladern entsteht. Damit dieses Prinzip überhaupt möglich ist ohne eine Beschädigung zu verursachen, sind spezielle Kabeltypen und besonders geformte Messer erforderlich. Ferner ist in der Praxis nicht auszuschließen, dass eine derartige Kabelbearbeitungsvorrichtung dennoch Beschädigungen der Komponenten des Kabels unterhalb der Kabelfolie verursacht, insbesondere wenn das Kabel keinen vollständig gleichmäßigen kreisrunden Querschnitt aufweist, nicht exakt geführt werden kann und die Messer nicht bei gleichbleibendem Abstand zur Kabelmittelachse symmetrisch über den Kabelmantel gleiten können. Kleinste Unebenheiten und Toleranzen können zu Schäden führen, wenn das Messer toleranzbedingt an einigen Stellen des Kabels tiefer eindringt, als vorgesehen.

Die gattungsgemäße WO 2015/125129 A1 offenbart ein System zum Entfernen einer Kabelfolie von einem elektrischen Kabel, wobei mittels eines Lasers eine Kerbe in die Kabelfolie eingebracht wird. Anschließend wird das Kabel um seine Mittelachse herum verdrillt, um die geschwächte Kabelfolie abzureißen.

In Anbetracht des bekannten Stands der Technik besteht die Aufgabe der vorliegenden Erfindung darin, ein Verfahren zum Entfernen einer Kabelfolie bereitzustellen, bei dem die Kabelfolie einfach, prozesssicher und ohne Beschädigung des Kabels von dem zu bearbeitenden Kabelabschnitt entfernt werden kann.

Der vorliegenden Erfindung liegt auch die Aufgabe zugrunde, eine Vorrichtung zum automatisierten Entfernen einer Kabelfolie bereitzustellen, die eine sichere Entfernung der Kabelfolie ohne Beschädigung des Kabels ermöglicht.

Schließlich ist es auch Aufgabe der Erfindung, ein System zum Konfektionieren von elektrischen Kabeln bereitzustellen.

Die Aufgabe wird für das Verfahren mit den in Anspruch 1 aufgeführten Merkmalen gelöst. Hinsichtlich der Vorrichtung wird die Aufgabe durch die Merkmale des Anspruchs 10 und für das System durch die Merkmale des Anspruchs 15 gelöst. Die abhängigen Ansprüche und die nachfolgend beschriebenen Merkmale betreffen vorteilhafte Ausführungsformen und Varianten der Erfindung.

Bei dem Verfahren zum automatisierten Entfernen einer Kabelfolie von einem zu bearbeitenden Kabelabschnitt eines elektrischen Kabels ist vorgesehen, dass die Kabelfolie in dem zu bearbeitenden Kabelabschnitt zumindest teilweise freigelegt wird, wonach im Bereich des zu bearbeitenden Kabelabschnitts wenigstens ein ringförmig um die Kabelfolie umlaufender Riss in die Kabelfolie eingebracht wird, wonach die Kabelfolie von dem zu bearbeitenden Kabelabschnitt entfernt wird. Dabei ist vorgesehen, dass zum Einbringen des ringförmig umlaufenden Risses zumindest die folgenden Schritte vorgesehen sind:
- Vorbearbeiten wenigstens einer der Kabelmittelachse abgewandten Außenschicht der Kabelfolie zumindest im Bereich einer wenigstens teilringförmig umlaufenden vorgesehenen Rissposition, wobei die mechanische Belastbarkeit der Außenschicht im Bereich der vorgesehenen Rissposition durch die Vorbehandlung zumindest reduziert wird;
- Exzentrisches Verdrehen des zu bearbeitenden Kabelabschnitts und/oder Verbiegen des zu bearbeitenden Kabelabschnitts derart, dass eine unterhalb der vorbehandelten Außenschicht befindliche Innenschicht der Kabelfolie teilringförmig oder ringförmig umlaufend einreißt.

Bei dem zu bearbeitenden Kabelabschnitt kann es sich um ein Kabelendstück oder ein Kabelfenster (vom Kabelmantel befreiter Abschnitt des Kabels zwischen den Endstücken) handeln.

Vorzugsweise wird der zu bearbeitende Kabelabschnitt zur elektrischen und/oder mechanischen Verbindung, bzw. Kontaktierung mit einem Steckverbinder, einem elektrischen Gerät und/oder zur elektrischen und/oder mechanischen Befestigung an einem von dem Kabel unabhängigen Bauteil (z. B. einem Gerätegehäuse oder einem Karosserieteil eines Fahrzeugs) zumindest teilweise abisoliert. Es kann beispielsweise vorgesehen sein, dass der zu bearbeitende Kabelabschnitt mit einem Steckverbinder, einem weiteren Kabel und/oder einer Masseklemme elektrisch und/oder mechanisch verbunden wird.

Je nach Aufbau des elektrischen Kabels kann es erforderlich sein, die Kabelfolie in einem entsprechenden Arbeitsschritt zu entfernen, um die in dem Kabel noch tiefer liegenden Strukturen zu erreichen. An dieser Stelle setzt die vorliegende Erfindung an.

Bei dem elektrischen Kabel kann es sich um ein beliebiges elektrisches Kabel mit einem oder mehreren Innenleitern und/oder mit einem oder mehreren Außenleitern handeln. Besonders vorteilhaft eignet sich die Erfindung zum Entfernen der Kabelfolie von elektrischen Kabeln mit großem Querschnitt für eine hohe Stromübertragung, beispielsweise im Fahrzeugbereich, besonders bevorzugt im Bereich der Elektromobilität.

Beispielsweise kann die Erfindung vorteilhaft zur Verwendung mit einem einadrigen Koaxialkabel zur Übertragung von elektrischer Leistung verwendet werden, das insbesondere einen Aufbau bestehend aus einem außenliegenden Kabelmantel, gefolgt von einer Kabelfolie, gefolgt von einem Kabelschirmgeflecht, gefolgt von einem Dielektrikum bzw. Isolator und schließlich gefolgt von einem Innenleiter, aufweist. Häufig wird bei einem derartigen Kabel im Zuge der Konfektionierung ein ringförmiger Masseanschluss eines Steckverbinders zunächst mit dem Kabelschirmgeflecht verbunden, wobei das Kabelschirmgeflecht bzw. der Außenleiter nach dessen Freilegung nach hinten umgestülpt wird, wodurch gleichzeitig ein zuverlässiger Zugabfang bereitgestellt werden kann. Zuvor muss im Zuge der Freilegung des Kabelschirmgeflechts zunächst die Kabelfolie entfernt werden, nachdem diese durch Entfernen des Kabelmantels zugänglich gemacht wurde.

Wie vorstehend erwähnt kann sich die Kabelfolie allerdings an einer beliebigen Stelle innerhalb des Kabels relativ zu einem oder mehreren Innenleitern, einem eventuell vorhandenen Dielektrikum, einem eventuelle vorhandenen Kabelschirmgeflecht und dem Kabelmantel befinden.

Beispielsweise kann sich die Erfindung auch zur Bearbeitung eines Kabelabschnitts eines Kabels eignen, dessen Aufbau insbesondere aus einem außenliegenden Kabelmantel, gefolgt von einem Kabelschirmgeflecht, gefolgt von der Kabelfolie und schließlich gefolgt von weiteren Komponenten, beispielsweise einem Dielektrikum und einem oder mehreren Innenleitern, besteht. Die Kabelfolie kann in diesem Fall teilweise freigelegt werden, indem der Kabelmantel und das darunter liegende Kabelschirmgeflecht zumindest teilweise abisoliert bzw. entfernt werden. Es kann auch vorgesehen sein, dass der Kabelmantel entfernt wird und das Kabelschirmgeflecht nur aufgestellt oder nach hinten umgeschlagen wird, wobei das Kabelschirmgeflecht ohne weitere Bearbeitung umgeschlagen oder aber auch zusätzlich abgelängt und/oder entflochten werden kann. Schließlich muss nur die Zugänglichkeit der Kabelfolie für die weitere erfindungsgemäße Bearbeitung sichergestellt sein.

Vorzugsweise wird die Kabelfolie derart freigelegt, dass diese zumindest in dem Bereich, in dem die Kabelfolie abgetrennt werden soll, zugänglich wird. Beispielsweise muss ein Kabelmantel (oder ein Außenleiter/Kabelschirmgeflecht), der auf bekannte Weise, beispielsweise durch ein Messer, eingeschnitten und abschließend aufgetrennt wird, nicht zunächst vollständig von dem Kabel entfernt werden, bevor die Kabelfolie erfindungsgemäß bearbeitet wird.

Der abgetrennte Kabelmantel, der auch als Abisolierstück bezeichnet wird, kann auf dem Kabel verbleiben, vorzugsweise wird der abgetrennte Kabelmantel zumindest ein kleines Wegstück in Richtung auf das nahegelegene Kabelende verschoben, um ein Teilstück der Kabelfolie freizulegen.

Es kann vorgesehen sein, dass zur Entfernung oder zur Unterstützung der Entfernung der Kabelfolie zumindest eine der Kabelmittelachse abgewandte Außenschicht der Kabelfolie zumindest im Bereich einer vorgesehenen Rissposition einer thermischen Behandlung, einer chemischen Behandlung, einer abrasiven Behandlung und/oder einem Saugvorgang unterzogen wird und/oder eine Abziehhilfe auf die Kabelfolie aufgeklebt und abgezogen wird.

Dadurch, dass die Kabelfolie erst zur Entfernung oder zur Unterstützung der Entfernung der Kabelfolie behandelt wird, kann die Kabelfolie in den nicht behandelten Abschnitten des Kabels nach wie vor ihre komplette schützende Wirkung (elektromagnetisch, mechanisch und/oder dichtend) in vollem Umfang bereitstellen. Die Kabelfolie muss damit nicht bereits während der Herstellung des Kabels in ihrer mechanischen Belastbarkeit manipuliert werden, was die Herstellung des Kabels ferner vereinfacht.

Insbesondere kann im Sinne der Erfindung vorgesehen sein, dass die Kabelfolie nicht mit einem Messer vorbearbeitet wird. Vorzugsweise wird die Kabelfolie bei der erfindungsgemäßen Bearbeitung nicht geschnitten. Somit kann keine Beschädigung der unter der Kabelfolie befindlichen Komponenten des Kabels stattfinden, insbesondere wenn lediglich die Außenschicht behandelt wird.

Ein Kabelschirmgeflecht ist beispielsweise häufig aus Schirmlitzen bestehend aus verzinntem Kupfer aufgebaut. Die auf dem Kupfer befindliche Zinnschicht ("Ziehhaut") darf dabei keinesfalls beschädigt werden, da die mechanische Belastbarkeit des Kabels aufgrund der Brüchigkeit des reinen Kupfers hierdurch beeinträchtigt wird. Häufig ist eine Kabelfolie schützend um ein derartiges Kabelschirmgeflecht gewickelt, wobei die Erfindung besonders vorteilhaft zum Entfernen einer derartigen Kabelfolie verwendet werden kann, da eine Beschädigung des darunter liegenden Kabelschirmgeflechts ausgeschlossen werden kann.

Mitunter ist die zu entfernende Kabelfolie aber auch unter einem Kabelschirmgeflecht und auf einer weiteren Komponente des Kabels, insbesondere einem Dielektrikum bzw. einem Isolator angeordnet. Auch bei einem derartigen Kabelaufbau ist die Erfindung vorteilhaft einsetzbar, da dann eine Beschädigung des Dielektrikums bzw. Isolators (beispielsweise durch ein Messer während des Entfernens der Kabelfolie) ausgeschlossen kann. Eine Beschädigung des Dielektrikums bzw. Isolators kann beispielsweise dessen mechanische Belastbarkeit und damit dessen Langzeitstabilität negativ beeinflussen. Ferner können die isolierenden bzw. elektrischen Eigenschaften des Dielektrikums/Isolators verschlechtert sein.

Abhängig von der gewählten Behandlung der Kabelfolie ist es auch möglich, die Kabelfolie vollständig bzw. durchgängig zu behandeln, d. h. die Kabelfolie auch in Bereichen der Kabelfolie unterhalb der Außenschicht durch die erfindungsgemäßen Varianten des Verfahrens zu behandeln, wenn dadurch keine Beeinträchtigung der unter der Kabelfolie befindlichen Komponenten des elektrischen Kabels zu erwarten ist.

Auch wenn sich die Behandlung durch die vorstehenden Varianten also gegebenenfalls über die Außenschicht hinaus auch in die Innenschicht bzw. vollständig durch die Kabelfolie erstrecken kann, kann es anwendungsbedingt von Vorteil sein, lediglich die Au-βenschicht zu behandeln, da dann die schützende Wirkung der Kabelfolie dazu verwendet werden kann, die unter der Kabelfolie befindlichen Komponenten des Kabels während der Behandlung durch die vorstehend genannten Varianten des Verfahrens zu schützen.

Es kann vorgesehen sein, dass die Kabelfolie in dem Kabelabschnitt vollständig entfernt wird, ohne dass weitere Maßnahmen erforderlich sind.

Es kann vorgesehen sein, dass zur Unterstützung der Entfernung der Kabelfolie eine Vorbearbeitung vor dem Entfernen der Kabelfolie zumindest im Bereich der vorgesehenen Rissposition durch eine der erfindungsgemäßen Varianten (thermische Behandlung, chemische Behandlung, abrasive Behandlung, Saugvorgang und/oder Abziehhilfe) durchgeführt wird.

In einer Weiterbildung der Erfindung kann vorgesehen sein, zur Unterstützung der Entfernung der Kabelfolie die mechanische Belastbarkeit der Kabelfolie zumindest teilringförmig, vollständig oder abschnittsweise umlaufend entlang des Umfangs der Kabelfolie zu reduzieren.

Beispielsweise kann vorgesehen sein, dass die mechanische Belastbarkeit symmetrisch umlaufend entlang des Umfangs der Kabelfolie reduziert wird.

Es kann zusätzlich oder alternativ auch vorgesehen sein, dass die mechanische Belastbarkeit der Kabelfolie entlang der Kabelmittelachse vollständig oder abschnittsweise im Bereich des zu bearbeitenden Kabelabschnitts reduziert wird.

Es können "Sollbruchstellen" in die Kabelfolie eingebracht werden, deren Anzahl und Umfang anwendungsspezifisch an das Kabel, die Kabelfolie und gegebenenfalls weitere Parameter anzupassen ist.

Es kann vorgesehen sein, die Kabelfolie im Bereich der vorgesehenen Rissposition im Zuge der Vorbearbeitung zumindest teilringförmig, vollständig oder abschnittsweise umlaufend entlang des Umfangs der Kabelfolie zu prägen und/oder zu perforieren.

In einer Weiterbildung der Erfindung kann außerdem vorgesehen sein, dass ein teilringförmig oder ringförmig umlaufender Riss an der vorgesehenen Rissposition derart in die Kabelfolie eingebracht wird, dass sich der Riss durch die Außenschicht und vorzugsweise zumindest teilweise auch durch eine unter der Außenschicht befindliche Innenschicht der Kabelfolie erstreckt.

Es kann also vorgesehen sein, dass ein Riss teilringförmig, vollständig oder abschnittsweise umlaufend entlang des Umfangs der Kabelfolie und/oder entlang der Mittelachse des Kabels lediglich in die Außenschicht oder in einen Teil der Außenschicht eingebracht wird. Es kann aber auch vorgesehen sein, dass ein Riss teilringförmig, vollständig oder abschnittsweise umlaufend entlang des Umfangs der Kabelfolie und/oder entlang der Mittelachse des Kabels in Radialrichtung vollständig durch die Kabelfolie, d. h. durch die Außenschicht und durch die Innenschicht, eingebracht wird. Auch ein Riss, der nur teilweise in die Innenschicht der Kabelfolie eindringt, ist möglich.

Ein Riss in der Kabelfolie kann eine geeignete Sollbruchstelle darstellen bzw. die mechanische Belastbarkeit der Kabelfolie an der Rissposition in gewünschtem Maße reduzieren. Die Art des Risses, d. h. Länge, Tiefe und Breite sowie gegebenenfalls auch die Anzahl der Risse, kann der Fachmann anwendungsspezifisch festlegen.

Durch das vorgeschlagene Verdrehen und/oder Verbiegen des zu bearbeitenden Kabelabschnitts an der oder den entsprechenden Stellen kann die Kabelfolie gezielt mechanischer Belastung ausgesetzt werden, derart, dass die Kabelfolie vorzugsweise (aber nicht unbedingt ausschließlich) an der vorgesehenen Rissposition einreißt.

Wenn bereits ein Riss zumindest teilweise in die Kabelfolie und/oder entlang der Kabelfolie eingebracht wurde, kann dieser Riss durch das Verdrehen und/oder Verbiegen des Kabelabschnitts erweitert werden. Wenn zuvor kein Riss eingebracht, sondern die Kabelfolie mechanisch (unsichtbar) lediglich geschwächt wurde, kann durch das Verdrehen und/oder Verbiegen des zu bearbeitenden Kabelabschnitts der Riss auch erst entstehen.

Der Erfinder hat erkannt, dass insbesondere eine mechanische Belastung auf Grundlage von Torsion und/oder Biegung zu dem gewünschten Ergebnis führen kann.

Es kann vorgesehen sein, dass durch die verfahrensgemäße Behandlung nach Anspruch 1 ein Riss zumindest nur in der Außenschicht der Kabelfolie erzeugt wurde. Bei der Außenschicht handelt es sich häufig um eine Kunststofffolie, während die - optional zusätzlich vorhandene - Innenschicht häufig als Metallschicht ausgebildet ist. Eine derart ausgebildete Innenschicht lässt sich durch ein Verdrehen bzw. Verbiegen relativ leicht brechen bzw. einreißen, um einen Riss zu erzeugen.

In einer Weiterbildung der Erfindung kann vorgesehen sein, dass die thermische Behandlung einen Schmelzprozess und/oder einen Kälteprozess umfasst.

Durch einen Schmelzprozess können Teile der Kabelfolie, insbesondere im Bereich der Außenschicht der Kabelfolie, abgeschmolzen werden. Anstelle eines Schmelzprozesses kann auch ein Verdampfen der Kabelfolie, insbesondere im Bereich deren Außenschicht, vorgesehen sein.

Ein Kälteprozess kann vorteilhaft sein, um die Brüchigkeit der Kabelfolie, insbesondere im Bereich der Außenschicht, zumindest vorübergehend zu erhöhen. Insbesondere kann hierfür eine Vereisungstechnik unter Zuhilfenahme von Flüssigstickstoff oder ähnlichen Kältemitteln vorgesehen sein.

In einer Weiterbildung der Erfindung kann vorgesehen sein, dass für die thermische Behandlung wenigstens ein erhitztes Formwerkzeug und/oder wenigstens ein Heizdraht verwendet wird, insbesondere um die Kabelfolie an- oder abzuschmelzen.

Bei dem Formwerkzeug kann es sich vorzugsweise um eine konkav geformte, einem Schneidewerkzeug ähnliche Einrichtung handeln. Es kann - unabhängig von der Form des Formwerkzeugs - beispielsweise ein stumpfes Schneidemesser vorgesehen sein, das die Kabelfolie während der thermischen Vorbearbeitung nicht zu durchschneiden, sondern über die Kontaktflächen der Schneide lediglich gezielt zu durchschmelzen vermag. Die Werkzeugschneide kann beispielsweise schmaler bzw. kleiner sein als 10 mm, vorzugsweise kleiner sein als 5 mm, besonders bevorzugt kleiner sein als 2 mm und ganz besonders bevorzugt kleiner sein als 1 mm. Vorzugsweise ist die Schneide aber breiter als 1 mm. Gegebenenfalls kann es sich bei dem erhitzten Formwerkzeug auch um das Formwerkzeug handeln, mit dem der Kabelmantel zum Freilegen der Kabelfolie durchtrennt wird.

Es kann auch vorgesehen sein, dass ein Heizdraht, eine Heizspule oder eine ähnliche Einrichtung verwendet werden, beispielsweise in konkaver bzw. dem Kabel angepasster Form oder aber auch linear ausgebildet.

Insbesondere kann vorgesehen sein, dass zwei, drei, vier, fünf oder mehr Formwerkzeuge und/oder Heizdrähte verwendet werden, die umlaufend um das Kabel angeordnet sind, um die Kabelfolie teilringförmig, vollständig oder abschnittsweise umlaufend entlang des Umfangs der Kabelfolie zu bearbeiten.

Es kann vorgesehen sein, dass die Kabelfolie lediglich im Bereich der Außenschicht an- oder abgeschmolzen wird. Es kann aber auch vorgesehen sein, dass die Kabelfolie vollständig durchgeschmolzen oder zumindest eine Innenschicht, die unterhalb der Au-βenschicht liegt, teilweise angeschmolzen wird.

In einer Weiterbildung kann vorgesehen sein, dass das Kabel, das wenigstens eine Formwerkzeug und/oder der wenigstens eine Heizdraht während der thermischen Behandlung gedreht werden.

Somit können insbesondere Formwerkzeuge und/oder Heizdrähte oder Ähnliches verwendet werden, die einen linearen Aufbau aufweisen, d. h. das Kabel nicht oder zumindest nur teilweise umgreifen.

In einer Weiterbildung kann außerdem vorgesehen sein, dass für den Schmelzprozess eine Schmelztemperatur verwendet wird, die größer ist als die Schmelztemperatur der Außenschicht der Kabelfolie, aber kleiner ist als die Schmelztemperatur der Innenschicht der Kabelfolie und/oder die Schmelztemperatur eines Kabelschirmgeflechts oder eines Dielektrikums (oder einer sonstigen Komponente) des Kabels.

Es kann aber auch vorgesehen sein, dass als Schmelztemperatur eine Temperatur gewählt wird, die größer ist als die Schmelztemperatur der Außenschicht und der Innenschicht der Kabelfolie, aber kleiner ist als die Schmelztemperatur eines Kabelschirmgeflechts oder eines Dielektrikums (oder einer sonstigen Komponente) des Kabels. Die Kabelfolie kann damit auch vollständig durchgeschmolzen werden, ohne weitere Komponente des Kabels zu schädigen.

Es kann eine Schmelztemperatur vorgesehen sein, die den Kabelmantel, ein eventuell vorhandenes Kabelschirmgeflecht, ein eventuell vorhandenes Dielektrikum und/oder den wenigstens einen Innenleiter des Kabels nicht negativ beeinflusst.

Grundsätzlich kann eine beliebige Schmelztemperatur verwendet werden, insbesondere wenn der Schmelzprozess nur sehr kurz und ggf. nur zum Schmelzen der Außenschicht der Kabelfolie vorgesehen ist.

Beispielsweise beträgt die Schmelztemperatur von PET 250 °C bis 300 °C, was deutlich unter der Schmelztemperatur von Aluminium und dem als Kabelmantel häufig verwendeten Silikon liegt. Eine Schmelztemperatur oberhalb von 250 °C bis 300 °C kann somit bevorzugt sein. Es können allerdings beliebige Schmelztemperaturen verwendet werden, beispielsweise eine Schmelztemperatur im Bereich von 100 °C bis 1.000 °C (oder mehr), 200 °C bis 700 °C (oder mehr) oder 250 °C bis 500 °C (oder mehr). Beispielsweise kann eine Schmelztemperatur von 500 °C von Vorteil sein.

Für die thermische Behandlung kann auch vorgesehen sein, dass die Kabelfolie unter Verwendung einer gerichteten (Mikro-)Flamme, beispielsweise einer Gasflamme, und/oder unter Verwendung eines Lasers an- oder abgeschmolzen wird. Vorzugsweise wird in diesem Fall das Kabel während der Behandlung gedreht.

Es kann, wie vorstehend bereits erwähnt, auch eine chemische Behandlung vorgesehen sein. Dabei kann eine Säure oder eine Base verwendet werden, insbesondere eine Säure oder Base, die lediglich oder im Wesentlichen die Kabelfolie, insbesondere die Außenschicht der Kabelfolie, angreift. Durch Verwendung einer Säure oder Base kann die Außenschicht und/oder die Innenschicht der Kabelfolie zumindest im Bereich der vorgesehenen Rissposition abgearbeitet oder zumindest in deren mechanischer Belastbarkeit reduziert werden.

Zur Reduzierung der mechanischen Belastbarkeit kann grundsätzlich aber eine beliebige chemische Behandlung vorgesehen sein, wobei zumindest im Bereich der vorgesehenen Rissposition eine chemische Reaktion insbesondere der Außenschicht der Kabelfolie ausgelöst werden kann, beispielsweise eine Oxidation, die die mechanische Belastbarkeit der Kabelfolie herabsetzt.

Zur Entfernung oder zur Unterstützung der Entfernung der Kabelfolie kann auch ein Saugvorgang vorgesehen sein, wobei beispielsweise unter Verwendung von Unterdruck ein Saugwerkzeug zumindest im Bereich der vorgesehenen Rissposition, beispielsweise ein konkav geformtes Saugwerkzeug, angesetzt wird, wobei die Außenschicht und/oder Innenschicht bzw. die Kabelfolie zumindest im Bereich der vorgesehenen Rissposition abgezogen bzw. ein/abgerissen werden kann.

Der Saugvorgang kann insbesondere zur Entfernung der Kabelfolie auch ergänzend bzw. unterstützend zu den anderen Behandlungen nach Anspruch 1 eingesetzt werden.

Ferner kann eine abrasive Behandlung, insbesondere ein Schleif- oder Bürstprozess, zumindest im Bereich der vorgesehenen Rissposition vorgesehen sein, um zumindest die Außenschicht der Kabelfolie teilweise abzutragen, insbesondere um die mechanische Belastbarkeit der Kabelfolie zu reduzieren.

Schließlich ist es auch möglich, eine Abziehhilfe zumindest teilweise umlaufend entlang des Umfangs der Kabelfolie aufzukleben bzw. stoffschlüssig mit der Außenschicht der Kabelfolie zu verbinden, wodurch die Kabelfolie oder zumindest die Außenschicht der Kabelfolie bei einem Abziehen der Abziehhilfe entfernt bzw. ein/abgerissen werden kann. Der zurückbleibende Teil der Kabelfolie, beispielsweise die Innenschicht, weist anschließend eine verringerte mechanische Belastbarkeit auf und kann gegebenenfalls abgesaugt oder anderweitig entfernt werden.

Grundgedanke der Erfindung ist es, die Kabelfolie zu entfernen bzw. einen Riss in der Kabelfolie zu erzeugen, ohne die Kabelfolie dabei zu schneiden.

In einer Weiterbildung kann insbesondere vorgesehen sein, dass die mechanische Belastbarkeit der Kabelfolie durch die Vorbearbeitung reduziert wird, indem die Brüchigkeit, die Torsionsfestigkeit und/oder die Biegefestigkeit der Kabelfolie, insbesondere der Außenschicht der Kabelfolie, reduziert wird.

Insbesondere soll die Anfälligkeit zur Ausbildung von Rissen in dem Bereich, in dem die mechanische Belastbarkeit reduziert wurde, gefördert werden.

In einer Weiterbildung der Erfindung kann vorgesehen sein, dass ein, zwei, drei, vier oder mehr Aktuatoren (insbesondere Linearmotoren oder angetriebene Zylinder) und/oder wenigstens ein Exzenter verwendet werden, um den zu bearbeitenden Kabelabschnitt zu verdrehen und/oder entlang wenigstens eines Freiheitsgrades zu verbiegen.

Vorzugsweise sind vier Aktuatoren vorgesehen, um den zu bearbeitenden Kabelabschnitt in zumindest zwei Freiheitsgraden zu verbiegen. Hierdurch kann in dem zu bearbeitenden Bereich der Kabelfolie, der vorher gemäß einer der genannten Varianten des Verfahrens bearbeitet wurde, ein Bruch bzw. Riss technisch leicht ausgebildet werden.

In einer Weiterbildung der Erfindung kann vorgesehen sein, dass als Kabelfolie eine Verbundfolie aus wenigstens zwei Einzelschichten verwendet wird, wobei die Innenschicht aus wenigstens einer der Einzelschichten und die Außenschicht aus der oder den weiteren Einzelschichten gebildet ist, und wobei die Innenschicht vorzugsweise eine höhere mechanische Brüchigkeit aufweist, als die Außenschicht.

Als Verbundfolie können beispielsweise metallisierte Kunststofffolien oder auch mehrere übereinander angeordnete Einzelfolien verstanden werden.

Das erfindungsgemäße Verfahren umfasst somit auch eine Verwendung einer geeigneten Kabelfolie für ein zu bearbeitendes elektrisches Kabel.

Durch die Art der verwendeten Kabelfolie kann das erfindungsgemäße Verfahren somit optimal auf das elektrische Kabel abgestimmt sein. Grundsätzlich kann aber ein beliebiges elektrisches Kabel mit einer beliebigen Kabelfolie vorgesehen sein.

Es kann insbesondere eine Kabelfolie in Form einer Verbundfolie aus zwei, drei, vier, fünf oder mehr Einzelschichten verwendet werden.

Ferner kann eine Kabelfolie aber auch aus einem einzigen Grundmaterial bestehen. Es kann z. B. eine durchgängige Polyesterfolie, PET-Folie oder Metallfolie (beispielsweise Aluminiumfolie oder Kupferfolie) vorgesehen sein. Bei einer Kabelfolie aus einem einzigen Grundmaterial kann die Außenschicht einen ersten Teil der Foliendicke und die Innenschicht einen zweiten Teil der Foliendicke umfassen. Die Außenschicht kann aber auch das komplette Material umfassen. Die Kabelfolie muss nicht unbedingt eine Innenschicht aufweisen.

Vorzugsweise wird als Kabelfolie eine Verbundfolie aus zwei Einzelschichten verwendet, wobei die Innenschicht aus der Einzelschicht mit höherer mechanischer Brüchigkeit und die Außenschicht aus der Einzelschicht mit geringerer mechanischer Brüchigkeit ausgebildet ist.

In einer Weiterbildung kann insbesondere vorgesehen sein, dass eine Verbundfolie aus einem Kunststoff, vorzugsweise PET (Polyethylenterephthalat), und einem Metall, vorzugsweise Aluminium, verwendet wird, wobei die Außenschicht durch eine Einzelschicht aus dem Kunststoff und die Innenschicht aus einer weiteren Einzelschicht aus dem Metall gebildet ist.

Eine derart ausgebildete Kabelfolie kann somit eine brüchige Innenschicht aufweisen (beispielsweise eine Kupfer- oder Aluminiumschicht) und eine mechanisch strapazierbare Kunststoff-Außenschicht (z. B. PET). Das erfindungsgemäße Verfahren ist für derartige Verbundfolien, die bei elektrischen Kabeln häufig Verwendung finden, besonders vorteilhaft und effektiv, da vorzugsweise die strapazierfähige Außenschicht durch eine oder mehrere Varianten des Verfahrens nach Anspruch 1 entfernt oder zumindest so manipuliert werden kann, dass diese brüchig wird. Da die Innenschicht einer derartigen Verbundfolie ohne die schützende Außenschicht empfindlich gegenüber mechanischen Belastungen ist, kann die Kabelfolie nach Entfernung der Außenschicht an der vorgesehenen Rissposition anschließend leicht entfernt werden.

In einer Weiterbildung der Erfindung kann vorgesehen sein, dass die Kabelfolie nach dem Einbringen des Risses von dem zu bearbeitenden Kabelabschnitt entfernt wird, indem die Kabelfolie abgebürstet, abgeblasen, abgewickelt, abgestreift und/oder zusammen mit einem Kabelmantel abgezogen wird.

Insbesondere für eine automatisierte Entfernung der Kabelfolie kann es von Vorteil sein, die Kabelfolie zusammen mit dem Kabelmantel abzuziehen. Hierfür kann vorgesehen sein, dass beispielsweise bei einem zu bearbeitenden Kabelabschnitt in Form eines Kabelendstücks der Kabelmantel ringförmig umlaufend eingeschnitten und im Wesentlichen im Bereich der vorgesehenen Rissposition entlang der Kabelmittelachse längs von dem Kabel abgezogen wird, um die Kabelfolie im Bereich der vorgesehenen Rissposition freizulegen. Anschließend kann die Kabelfolie nach Anspruch 1 behandelt werden, wonach der Kabelmantel vollständig in Längsrichtung bzw. längs entlang der Kabelmittelachse von dem elektrischen Kabel abgezogen wird. Insbesondere wenn eine Verbundfolie aus einem Kunststoff als Außenschicht und einem Metall als Innenschicht vorgesehen ist, ist zu erwarten, dass die Kabelfolie stärker an dem Kabelmantel haftet, als an beispielsweise einem innenliegenden Kabelschirmgeflecht. Demnach kann die Kabelfolie über das innenliegende Kabelschirmgeflecht oder einen Innenleiter gleiten, während sie mit dem Kabelmantel abgezogen wird.

Es können grundsätzlich auch mehrere Kabelfolien innerhalb eines elektrischen Kabels vorgesehen sein, beispielsweise kann eine erste Kabelfolie zwischen Kabelmantel und Kabelschirmgeflecht und eine zweite Kabelfolie zwischen Dielektrikum und Innenleiter vorgesehen sein. Die Erfindung kann auch zum Entfernen mehrerer Kabelfolien aus einem elektrischen Kabel verwendet werden.

Die Erfindung betrifft ferner eine Vorrichtung zum automatisierten Entfernen einer Kabelfolie von einem zu bearbeitenden Kabelabschnitt eines elektrischen Kabels gemäß Anspruch 10.

Das erfindungsgemäße Verfahren eignet sich besonders vorteilhaft zur Verwendung mit einer Vorrichtung zum automatisierten Entfernen einer Kabelfolie, da das erfindungsgemäße Verfahren eine technisch einfach umzusetzende Möglichkeit offenbart, die Kabelfolie ohne Beschädigung weiterer Komponenten des Kabels von dem elektrischen Kabel zu entfernen.

Grundsätzlich sind Merkmale und Vorteile, die bereits betreffend das erfindungsgemä-ße Verfahren vorstehend erläutert wurden auch für die erfindungsgemäße Vorrichtung umsetzbar - und umgekehrt.

Die Erfindung betrifft außerdem ein System zum Konfektionieren von elektrischen Kabeln, umfassend eine Einrichtung zum Ablängen des elektrischen Kabels und/oder eine Einrichtung zum Abmanteln und/oder Abisolieren verschiedener Schichten des elektrischen Kabels und/oder eine Einrichtung zum Öffnen, Aufstellen und/oder Zurückstülpen eines Kabelschirmgeflechts und/oder eine Einrichtung zum Aufbringen und Kontaktieren eines Steckverbinderteils sowie eine Vorrichtung zum automatisierten Entfernen einer Kabelfolie gemäß den vorstehenden Ausführungen.

Ein derart vollautomatisiertes Konfektionierungssystem unter Verwendung einer Vorrichtung zum automatisierten Entfernen einer Kabelfolie mit den Schritten des vorstehend beschriebenen Verfahrens ist erfindungsgemäß erstmals ohne Beschädigung der unter der Kabelfolie befindlichen Komponenten des Kabels möglich. Zuvor war es erforderlich, die Kabelfolie innerhalb eines derartigen Systems manuell, d. h. von Hand, umständlich zu entfernen oder bei einem Schneideprozess die Beschädigung von weiteren Komponenten des Kabels in Kauf zu nehmen.

Bezüglich des Systems zum Konfektionieren von elektrischen Kabeln bietet es sich an, die entsprechenden Einrichtungen als "Fließbandprozess" bzw. als "Taktautomat" in aufeinanderfolgenden Einzelschritten anzuordnen, um die Bearbeitungszeit bei einer Massenabfertigung zu reduzieren.

Ergänzend sei darauf hingewiesen, dass die Begriffe, wie "umfassend", "aufweisen" oder "mit", keine anderen Merkmale oder Schritte ausschließen. Ferner schließen Begriffe, wie "ein" oder "das", die auf eine Einzahl von Schritten oder Merkmalen hinweisen, keine Mehrzahl von Schritten oder Merkmalen aus.

Nachfolgend werden Ausführungsbeispiele der Erfindung anhand der Zeichnung näher beschrieben. Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden. In den Figuren sind funktionsgleiche Elemente mit demselben Bezugszeichen versehen. Es zeigen schematisch:
- Fig. 1: einen Querschnitt eines elektrischen Koaxialkabels mit einem Innenleiter, einem Kabelschirmgeflecht und einer Kabelfolie;
- Fig. 2: einen Querschnitt eines elektrischen Kabels mit vier Innenleitern, einem Kabelschirmgeflecht und einer Kabelfolie;
- Fig. 3: eine isometrische Darstellung eines elektrischen Kabels gemäß Fig. 1 mit ringförmig umlaufend eingeschnittenem Kabelmantel;
- Fig. 4: eine isometrische Darstellung des elektrischen Kabels gemäß Fig. 3 mit teilweise abgezogenem Kabelmantel und freigelegter Kabelfolie;
- Fig. 5: das elektrische Kabel gemäß Fig. 4 nach einer teilringförmigen erfindungsgemäßen Bearbeitung der Kabelfolie;
- Fig. 6: das elektrische Kabel gemäß Fig. 5 während des Verbiegens des zu bearbeitenden Kabelabschnitts;
- Fig. 7: das elektrische Kabel gemäß Fig. 6 während des Abziehens der Kabelfolie zusammen mit dem Kabelmantel;
- Fig. 8: das elektrische Kabel gemäß Fig. 7 mit einem umgestülpten Kabelschirmgeflecht;
- Fig. 9: die Verwendung von vier Aktuatoren zum Verbiegen des zu bearbeitenden Kabelabschnitts;
- Fig. 10: die Verwendung einer Rotationseinrichtung bzw. eines Exzenters zum Verdrehen bzw. Verbiegen des zu bearbeitenden Kabelabschnitts;
- Fig. 11: die Verwendung von zwei beheizten Formwerkzeugen zur thermischen Behandlung der Kabelfolie;
- Fig. 12: die Verwendung eines Heizdrahts zur thermischen Behandlung der Kabelfolie;
- Fig. 13: die Verwendung einer Zuführeinrichtung für chemische Stoffe für die Behandlung der Kabelfolie;
- Fig. 14: die Verwendung einer Abziehhilfe für die Behandlung der Kabelfolie;
- Fig. 15: die Verwendung einer Drahtbürste zur Behandlung der Kabelfolie;
- Fig. 16: eine isometrische Darstellung eines elektrischen Kabels gemäß Fig. 1 während des Entfernens des Kabelmantels in Form eines Kabelfensters;
- Fig. 17: das elektrische Kabel gemäß Fig. 16 mit einer freigelegten und behandelten Kabelfolie in einem fensterförmigen Kabelabschnitt;
- Fig. 18: eine Vorrichtung zum automatisierten Entfernen einer Kabelfolie von einem zu bearbeitenden Kabelabschnitt eines elektrischen Kabels; und
- Fig. 19: ein System zum Konfektionieren von elektrischen Kabeln.

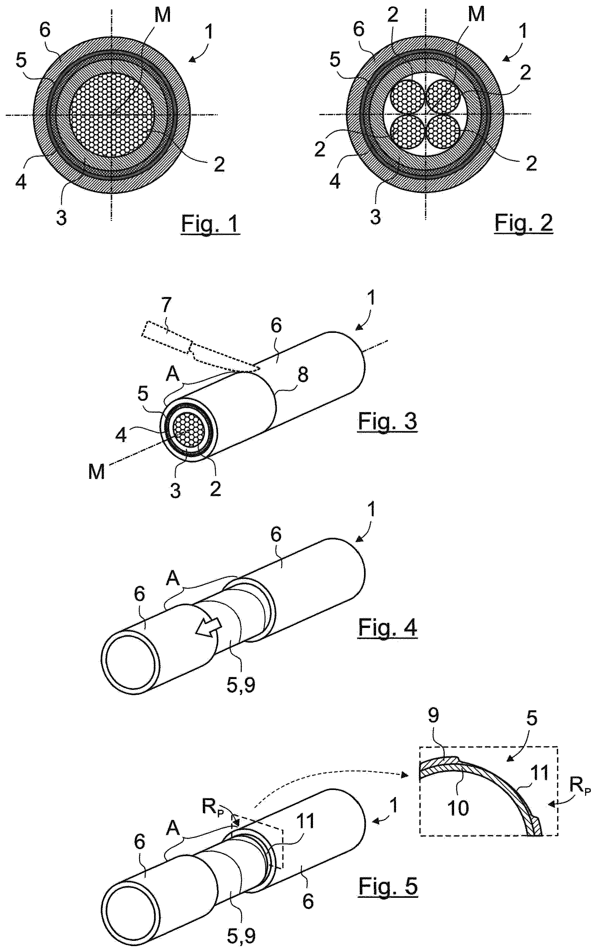

In Fig. 1 ist ein elektrisches Kabel 1 im Querschnitt dargestellt, an dem das erfindungsgemäße Verfahren vorteilhafte angewendet werden kann. Das rein beispielhaft und bezüglich der Größenverhältnisse stark schematisiert dargestellte elektrische Kabel 1 ist ein Koaxialkabel mit einem Innenleiter 2, der durch ein Dielektrikum (Isolator) 3 von einem Kabelschirmgeflecht bzw. Außenleiter 4 elektrisch isoliert ist. Um das Kabelschirmgeflecht 4 ist eine Kabelfolie 5 angeordnet. Schließlich ist das elektrische Kabel 1 von einem Kabelmantel 6 umgeben. Alle Komponenten des elektrischen Kabels 1 sind koaxial zu einer gemeinsamen Kabelmittelachse M angeordnet. Das Kabelschirmgeflecht 4 erfüllt vorliegend die Aufgabe der elektromagnetischen Abschirmung und des elektrischen Rückleiters und kann beispielsweise aus Kupfer mit einer am Außenumfang aufgebrachten schützenden Zinnschicht ("Ziehhaut") aufgebaut sein.

Grundsätzlich kann die Erfindung für beliebig aufgebaute Kabel verwendbar sein, insbesondere auch für ein Kabel, bei dem das Kabelschirmgeflecht bzw. der Außenleiter 4 unmittelbar unter dem Kabelmantel 6 und unmittelbar über der Kabelfolie 5 angeordnet ist. Unter der Kabelfolie 5 kann dann z. B. direkt das Dielektrikum 3 folgen.

Je nach Aufbau der Kabelfolie 5 kann die Kabelfolie 5 die elektromagnetische Abschirmung noch verbessern, die mechanische Stabilität und/oder Dichtigkeit, insbesondere gegen Feuchtigkeit, gewährleisten und ein Verkeilen des Kabelmantels 6 an dem Kabelschirmgeflecht 4 bzw. an den Einzellitzen des Kabelschirmgeflechts 4 verhindern, wodurch gegebenenfalls ein Abstreifen des Kabelmantels 6 von dem Kabelschirmgeflecht 4 beim Abisolieren überhaupt erst möglich werden kann.

Es ist bekannt, dass eine derartige Kabelfolie 5, die grundsätzlich an einer beliebigen Stelle innerhalb des Kabels 1 angeordnet sein kann, beispielsweise auch zwischen Kabelschirmgeflecht 4 und Dielektrikum 3 oder zwischen Dielektrikum 3 und Innenleiter 2, nur manuell und auch nur unter hohem Aufwand im Zuge einer Kabelkonfektionierung entfernt werden kann. Der Grund hierfür ist die gewollte hohe mechanische Belastbarkeit der Kabelfolie 5.

Grundsätzlich können auch mehrere Kabelfolien 5 innerhalb des elektrischen Kabels 1 vorgesehen sein, beispielsweise kann eine weitere Kabelfolie 5 zwischen Dielektrikum 3 und Innenleiter 2 vorgesehen sein (im Ausführungsbeispiel nicht der Fall). Die Erfindung kann somit auch zum Entfernen mehrerer Kabelfolien 5 aus einem elektrischen Kabel 1 verwendet werden.

Das in Fig. 1 dargestellte elektrische Kabel 1 ist lediglich eines einer Vielzahl elektrischer Kabel 1, deren Kabelfolie(n) 5 unter Verwendung des erfindungsgemäßen Verfahrens entfernt werden kann/können. Als weiteres Beispiel soll Fig. 2 dienen. Grundsätzlich ist die Erfindung aber selbstverständlich nicht auf die Verwendung mit einer bestimmten Art Kabel 1 beschränkt zu verstehen.

Fig. 2 zeigt ein im Wesentlichen mit Fig. 1 identisches Kabel 1, dieses weist allerdings vier Innenleiter 2 auf, die jeweils voneinander elektrisch isoliert sind (zur Vereinfachung nicht dargestellt). Die Erfindung ist somit insbesondere nicht auf die Verwendung eines Kabels 1 mit einer bestimmten Anzahl Innenleiter 2 beschränkt zu verstehen. Die Erfindung ist ferner nicht auf ein Kabel 1 beschränkt zu verstehen, bei dem Dielektrikum 3 und/oder Kabelschirmgeflecht 4 überhaupt vorliegen. Die Erfindung kann beispielsweise auch zum Entfernen der Kabelfolie 5 eines elektrischen Kabels 1, das lediglich einen oder mehrere Innenleiter 2 in Form von Litzen aufweist, die jeweils oder gemeinsam von einer Kabelfolie 5 umgeben sind, verwendet werden.

In den Figuren 3 bis 7 ist das erfindungsgemäße Verfahren mit optionalen bzw. beispielhaften Verfahrensschritten aufgezeigt.

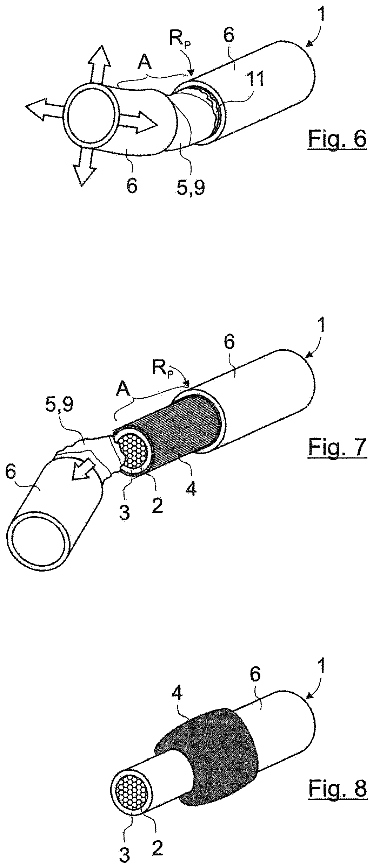

Fig. 8 zeigt einen weiterführenden, optionalen Schritt, um das Kabelschirmgeflecht 4 umzustülpen. Insofern das Kabelschirmgeflecht 4 direkt unter dem Kabelmantel 6 und über der Kabelfolie 5 angeordnet ist, kann das Umstülpen des Kabelschirmgeflechts 4 im Rahmen der Freilegung der Kabelfolie 5 ggf. aber auch nach dem Abisolieren des Kabelmantels 6 erfolgen.

Die Figuren 3 bis 8 zeigen jeweils das elektrische Kabel 1 mit dem zu bearbeitenden Kabelabschnitt A in isometrischer Darstellung. Bei dem dargestellten zu bearbeitenden Kabelabschnitt A handelt es sich vorliegend um einen Endabschnitt des elektrischen Kabels 1.

Es ist vorgesehen, die Kabelfolie 5 in dem zu bearbeitenden Kabelabschnitt A zunächst zumindest teilweise freizulegen, wie beispielsweise in den Figuren 3 und 4 dargestellt. Hierfür kann der Kabelmantel 6, insbesondere unter Verwendung eines nur schematisch angedeuteten Messers 7, in bekannter Weise zumindest teilweise umlaufend eingeschnitten werden, vorzugsweise derart, dass einer oder mehrere Stege oder ein schmaler umlaufender Kabelmantelring zurückbleiben und die darunterliegende Kabelfolie 5 somit möglichst unbeschädigt bleibt. Fig. 3 zeigt einen vollständig umlaufenden Schnitt 8, der entlang der Längsachse bzw. Kabelmittelachse M die Länge des zu bearbeitenden Kabelabschnitts A definiert.

Das Einschneiden und das Abziehen bzw. der Teilabzug des Kabelmantels 5 mit dem Messer 7 wird vorzugsweise automatisiert vorgenommen.

In Fig. 4 wird dargestellt, dass nach dem Einbringen des Schnitts 8 der Kabelmantel 6 zumindest zum Teil in Längsrichtung (entlang der Kabelmittelachse M) in Pfeilrichtung von dem elektrischen Kabel 1 abgezogen wird, derart, dass die Kabelfolie 5 zumindest teilweise freigelegt und für die nachfolgenden Verfahrensschritte zugänglich wird.

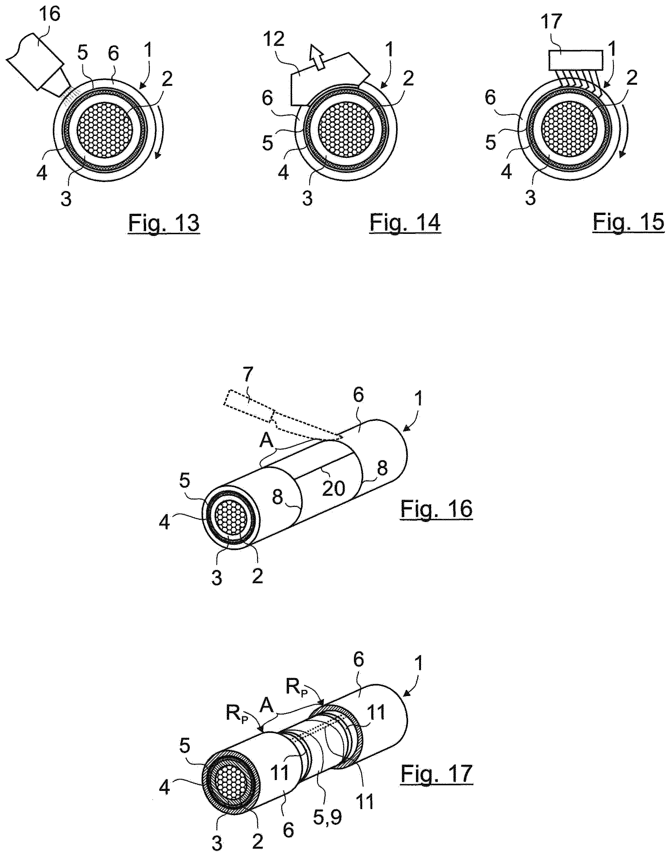

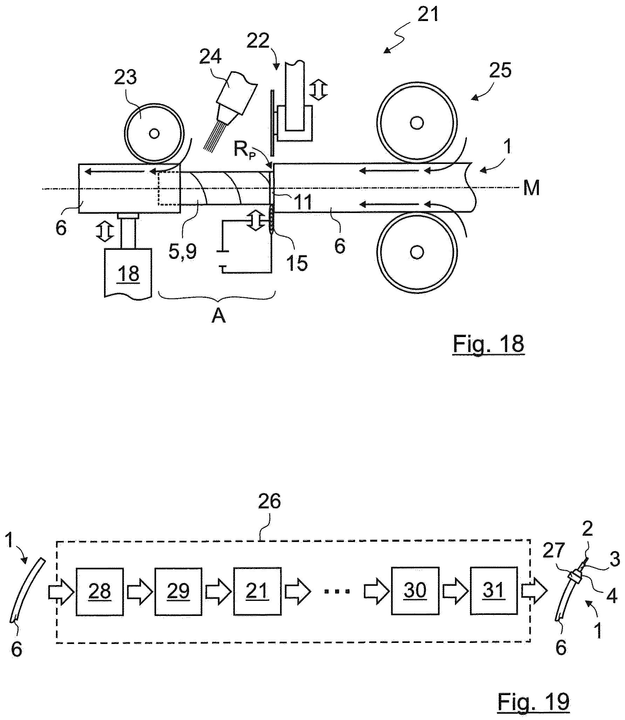

Zumeist ist die Kabelfolie 5 streifenförmig auf die darunter befindlichen Komponenten des Kabels 1, vorliegend das Kabelschirmgeflecht 4 bzw. spiralförmig aufgewickelt, wie in den Figuren 4 bis 7 und in den Figuren 17 und 18 dargestellt. Dies ist aber nicht zwingend der Fall.

Es ist im Ausführungsbeispiel vorgesehen, wie in Fig. 5 angedeutet, nach dem Freilegen der Kabelfolie 5 und vor dem Entfernen der Kabelfolie 5 zumindest in einer der Kabelmittelachse M abgewandten Außenschicht 9 der Kabelfolie 5 die mechanische Belastbarkeit der Kabelfolie 5 zumindest im Bereich einer vorgesehenen Rissposition R_{P} zu reduzieren. Die vorgesehene Rissposition R_{P} ist in Fig. 5 angedeutet und befindet sich vorzugsweise an oder nahe der Schnittkante des verbleibenden Kabelmantels 6.

In Fig. 5 ist ferner ein vergrößerter Abschnitt der vorgesehenen Rissposition R_{P} gezeigt, der einen schematischen Schnitt durch die Kabelfolie 5 zeigt, wobei die umgebenden und innenliegenden Bereiche des Kabels 1 zur Vereinfachung nicht dargestellt sind. In der Detailansicht sind zunächst die Außenschicht 9 der Kabelfolie 5 und auch eine unter der Außenschicht 9 befindliche Innenschicht 10 der Kabelfolie 5 dargestellt. Bei der im Ausführungsbeispiel dargestellten Kabelfolie 5 handelt es sich um eine Verbundfolie aus wenigstens zwei Einzelschichten, wobei die Innenschicht 10 aus wenigstens einer der Einzelschichten und die Außenschicht 9 aus der oder den weiteren Einzelschichten gebildet ist (vorliegend eine zweite Einzelschicht), und wobei die Innenschicht 10 vorzugsweise eine höhere mechanische Brüchigkeit aufweist, als die Außenschicht 9. Dabei kann insbesondere vorgesehen sein, dass eine Verbundfolie aus einem Kunststoff, vorzugsweise PET, und einem Metall, vorzugsweise Aluminium oder Kupfer, verwendet wird, wobei die Außenschicht 9 durch eine Einzelschicht aus dem Kunststoff und die Innenschicht 10 aus einer weiteren Einzelschicht aus dem Metall besteht.

Grundsätzlich kann auch vorgesehen sein, dass eine Kabelfolie 5 aus nur einer einzigen Einzelschicht bzw. aus einem einzigen Grundmaterial besteht. Die Außenschicht 9 kann dabei die komplette Kabelfolie 5 umfassen oder aber einen Teilbereich, wobei die Innenschicht 10 den verbleibenden Teilbereich umfasst oder keine Innenschicht 10 vorgesehen ist. Es kann auch vorgesehen sein, dass mehrere Kabelfolien 5, die jeweils aus einer Einzelschicht (oder mehreren Einzelschichten) bestehen, übereinander geschichtet verwendet werden. Auch dies ist als eine erfindungsgemäße Kabelfolie 5 bzw. Verbundfolie zu verstehen.

Im Ausführungsbeispiel ist vorgesehen, dass die mechanische Belastbarkeit durch das erfindungsgemäße Verfahren zumindest teilringförmig, vollständig oder abschnittsweise umlaufend entlang des Umfangs der Kabelfolie 5 reduziert wird.

Insbesondere durch (partielles) Entfernen der Außenschicht 9, Prägen der Außenschicht 9 oder Perforieren der Außenschicht 9 kann die mechanische Belastbarkeit der Kabelfolie 5 verringert werden. Beispielsweise kann vorgesehen sein, dass ein Riss 11 an der vorgesehenen Rissposition R_{P} derart in die Kabelfolie 5 eingebracht wird, dass sich der Riss 11 durch die Außenschicht 9 (wie in Fig. 5 dargestellt) und vorzugsweise zumindest teilweise durch die unter der Außenschicht 9 befindliche Innenschicht 10 der Kabelfolie 5 erstreckt.

Die mechanische Belastbarkeit der Kabelfolie 5 kann im Ausführungsbeispiel insbesondere dadurch reduziert werden, dass die Brüchigkeit, die Torsionsfestigkeit und/oder die Biegefestigkeit der Kabelfolie 5, insbesondere der Außenschicht 9 der Kabelfolie 5, reduziert wird. Ein Riss 11 oder eine sonstige optisch sichtbare Beeinflussung der Kabelfolie 5 sind dabei nicht unbedingt erforderlich - die mechanische Beeinflussung kann auch unsichtbar, beispielsweise durch chemische Veränderungen in der Kabelfolie 5 erfolgen.

In der Detailansicht der Fig. 5 ist ein teilringförmiger Riss 11 an der vorgesehenen Rissposition R_{P} dargestellt bzw. die Außenschicht 9 ist teilringförmig entlang des Umfangs der Kabelfolie 5 abgetragen/entfernt worden. Die hierdurch entstandene Sollbruchstelle kann gegebenenfalls ausreichen, um die Kabelfolie 5 nachfolgend leicht zu entfernen. Vorzugsweise wird die mechanische Belastbarkeit allerdings möglichst vollständig umlaufend entlang des Umfangs der Kabelfolie 5 reduziert bzw. wird die Außenschicht 9 möglichst vollständig abgetragen. Vornehmlich zur Verdeutlichung und Darstellung der Außenschicht 9 und der Innenschicht 10 in einer gemeinsamen Darstellung ist vorliegend ein teilringförmiger Riss 11 gezeigt.

Es kann eine thermische Behandlung, eine chemische Behandlung, eine abrasive Behandlung, ein Saugvorgang und/oder ein Aufkleben und Abziehen einer Abziehhilfe 12 vorgesehen sein, um die Kabelfolie 5 zu entfernen oder die Entfernung der Kabelfolie 5 zu unterstützen, insbesondere indem durch die vorgenannten Maßnahmen die mechanische Belastbarkeit der Kabelfolie 5, insbesondere in der Rissposition Rₚ, reduziert wird.

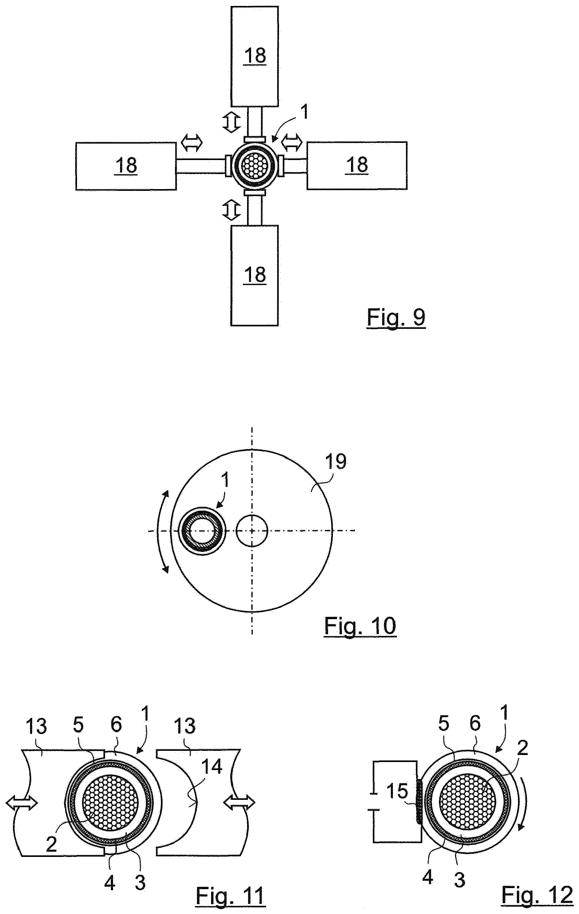

Die thermische Behandlung kann dabei insbesondere einen Schmelzprozess umfassen. In den Figuren 11 und 12 sind zwei Möglichkeiten einer thermischen Vorbearbeitung in Form eines Schmelzprozesses schematisch darstellt.

In Fig. 11 ist gezeigt, wie zwei erhitzte Formwerkzeuge 13 beidseits an die Kabelfolie 5 bzw. an das Kabel 1 im Bereich der vorgesehenen Rissposition R_{P} zugeführt werden. Bei den erhitzten Kontaktflächen 14 der Formwerkzeuge 13 kann es sich beispielsweise um stumpfe Werkzeugschneiden handeln, beispielsweise mit einer Breite von 1 mm oder mehr, die die Kabelfolie 5 allerdings nicht einzuschneiden vermögen. Alternativ zu der Verwendung von zwei Formwerkzeugen 13 kann auch nur ein Formwerkzeug 13 oder können drei, vier oder noch mehr Formwerkzeuge 13 verwendet werden, gegebenenfalls können nach dem Schmelzen zwischen den Formwerkzeugen 13 auch Stege in der Außenschicht 9 der Kabelfolie 5 entlang des Umfangs der Kabelfolie 5 verbleiben. Wenn eines oder mehrere Formwerkzeuge 13 verwendet werden, die die Kabelfolie 5 nicht vollständig umfassen, kann das Formwerkzeug 13 und/oder das elektrische Kabel 5 während der thermischen Vorbearbeitung ggf. gedreht werden, um ein Abschmelzen entlang des Umfangs des Kabels 1 zu ermöglichen.

Ein weiteres Beispiel einer thermischen Behandlung zum An- oder Abschmelzen der Kabelfolie 5 zumindest im Bereich der vorgesehenen Rissposition R_{P} ist in Fig. 12 dargestellt. Anstelle eines erhitzten Formwerkzeugs 13 wird vorliegend ein Heizdraht bzw. eine Heizspule 15 verwendet, wobei das Kabel 1 (alternativ oder zusätzlich auch der Heizdraht 15) während der Vorbearbeitung gedreht werden kann, wie durch den Pfeil in Fig. 12 angedeutet.

Vorzugsweise wird für den Schmelzprozess eine Schmelztemperatur verwendet, die größer ist als die Schmelztemperatur der Außenschicht 9 der Kabelfolie 5, aber kleiner ist als die Schmelztemperatur der Innenschicht 10 der Kabelfolie 5 und/oder die Schmelztemperatur sonstiger Komponenten des Kabels 1, insbesondere des Kabelschirmgeflechts 4, des Dielektrikums 3 und/oder des wenigstens einen Innenleiters 2 des Kabels 1. Beispielsweise kann eine Schmelztemperatur von 100 °C bis 1.000 °C oder mehr, vorzugsweise 200 °C bis 800 °C, besonders bevorzugt 300 °C bis 700 °C und ganz besonders bevorzugt 400 °C bis 600 °C, beispielsweise 500 °C bis 600 °C, vorgesehen sein. Die Schmelztemperatur kann regelbar sein.

Es kann auch vorgesehen sein, entgegen der Detailansicht in Fig. 5, nicht nur die Außenschicht 9 der Kabelfolie 5, sondern auch die Innenschicht 10 der Kabelfolie 5 abzutragen bzw. deren mechanische Belastbarkeit zu reduzieren (durch eine beliebige vorstehend genannte Variante zum Entfernen oder Unterstützen des Entfernens der Kabelfolie).

Beispielsweise kann vorgesehen sein, eine Schmelztemperatur zu wählen, derart, dass die Außenschicht 9 und die Innenschicht 10 der Kabelfolie 5 abgeschmolzen werden, während die darunter befindlichen Komponenten des elektrischen Kabels 1 unbeschädigt bleiben.

Die thermische Behandlung kann auch derart gestaltet werden, dass die Kabelfolie 5 über zumindest eine Teillänge, gegebenenfalls über die Gesamtlänge des zu bearbeitenden Kabelabschnitts A thermisch entfernt bzw. abgeschmolzen wird.

Im Zuge einer thermischen Behandlung kann auch vorgesehen sein, dass ein Kälteprozess durchgeführt wird. Dabei kann beispielsweise eine Vereisung unter Verwendung von Flüssigstickstoff oder einem sonstigen Kältemittel zumindest im Bereich der vorgesehenen Rissposition R_{P} vorgesehen sein, wodurch die Brüchigkeit zumindest der Au-βenschicht 9 der Kabelfolie 5 erhöht werden kann.

In den Figuren 13 bis 15 sind weitere Möglichkeiten zur Reduzierung der mechanischen Belastbarkeit der Kabelfolie 5, gegebenenfalls auch zur unmittelbaren vollständigen Entfernung der Kabelfolie 5 schematisch dargestellt.

In Fig. 13 ist eine Zuführeinrichtung 16 für chemische Stoffe gezeigt, wodurch eine chemische Behandlung erfolgen kann. Beispielsweise kann durch die Zuführeinrichtung 16 eine Säure, eine Base oder ein sonstiger chemischer Stoff, der eine Reaktion mit dem Material der Kabelfolie 5, insbesondere mit der Außenschicht 9 auslöst, beispielsweise in Form einer Oxidation, zugeführt wird, wodurch die mechanische Belastbarkeit der Kabelfolie 5 reduziert wird. Durch die Zuführeinrichtung 16 kann ferner der erwähnte Flüssigstickstoff zugeführt werden (es kann hierfür allerdings auch eine gesonderte Kältezufuhreinrichtung vorgesehen sein). Vorzugsweise kann das Kabel 1 (oder die Zuführeinrichtung 16) während der Zuführung des chemischen Stoffs gedreht werden.

In Fig. 14 ist eine Vorbehandlung mit einer Abziehhilfe 12 dargestellt. Dabei ist vorgesehen, dass die Abziehhilfe 12 auf die Außenschicht 9 der Kabelfolie 5 zumindest im Bereich der vorgesehenen Rissposition R_{P} aufgeklebt bzw. stoffschlüssig mit der Au-βenschicht 9 verbunden wird, wonach die Abziehhilfe 12 in radialer Richtung von der Kabelmittelachse M in Pfeilrichtung wegbewegt wird, wodurch die Kabelfolie 5, zumindest aber die Außenschicht 9 der Kabelfolie 5, ein/abreißt. Gegebenenfalls kann hierdurch die Kabelfolie 5 bereits komplett entfernt werden. Es können auch mehrere Abziehhilfen 12 entlang des Umfangs der Kabelfolie 5 verteilt angeordnet werden, beispielsweise zwei, drei, vier oder noch mehr Abziehhilfen 12. Die Abziehhilfe(n) 12 kann/können eine konkave Form aufweisen, um möglichst großflächig auf die Kabelfolie 5 aufklebbar zu sein. Gegebenenfalls kann auch eine drehende Bewegung der Abziehhilfe 12 oder des Kabels 1 zu einem Einreißen der Kabelfolie 5 führen.

In einer ähnlichen, alternativen Variante kann auch ein Saugvorgang anstelle der Abziehhilfe 12 vorgesehen sein. Dabei kann die Kabelfolie 5 bzw. die Außenschicht 9 der Kabelfolie 5 zumindest im Bereich der vorgesehenen Rissposition R_{P} mit einer Saugeinrichtung (nicht dargestellt) angesaugt und hierdurch an/abgerissen bzw. abgezogen werden.

In Fig. 15 ist als Beispiel für eine abrasive Behandlung eine Drahtbürste 17 schematisch dargestellt, die über die Oberfläche der Kabelfolie 5 bzw. über die Außenschicht 9 bewegt wird, beispielsweise indem das elektrische Kabel 1 gedreht wird, und hierdurch die Außenschicht 9 und/oder die Innenschicht 10 abträgt. Anstelle einer Drahtbürste 17 können auch vergleichbare abrasive Mittel vorgesehen sein, beispielsweise eine Schleifeinrichtung oder eine Kunststoffbürste.

Vor dem Entfernen der Kabelfolie 5 kann vorgesehen sein, dass der zu bearbeitende Kabelabschnitt A derart verdreht und/oder verbogen wird, dass die Kabelfolie 5 im Kabelabschnitt A, insbesondere an der vorgesehenen Rissposition R_{P}, ringförmig umlaufend einreißt, wie in Fig. 6 angedeutet. Insbesondere wenn die Brüchigkeit der Kabelfolie 5 durch Reduzieren der mechanischen Belastbarkeit zumindest der Außenschicht 9 der Kabelfolie 5 zumindest im Bereich der vorgesehenen Rissposition R_{P} erhöht ist, reißt die Kabelfolie 5 an der vorgesehenen Rissposition R_{P} nach entsprechender mechanischer Beanspruchung leicht ein. Ein gegebenenfalls bereits vorhandener, beispielsweise teilringförmig umlaufender Riss 11, der durch eine der vorgenannten Behandlungen, insbesondere nach den Figuren 11 bis 15, eingebracht wurde, kann sich hierdurch verstärken, bis die Kabelfolie 5 vollständig durchgerissen ist. Ein Riss 11 kann sich dadurch aber auch überhaupt erst bilden. Vorzugsweise ist die Kabelfolie 5 nach der mechanischen Belastung des zu bearbeitenden Kabelabschnitts A vollständig abgetrennt.

Zum Verdrehen und/oder Verbiegen des zu bearbeitenden Kabelabschnitts A können Aktuatoren verwendet werden. Beispielsweise zeigt Fig. 9 die Verwendung von vier Linearaktuatoren 18, um den zu bearbeitenden Kabelabschnitt A in zwei Freiheitsgraden zu verbiegen. Hierdurch kann eine wie in Fig. 6 durch die Pfeile dargestellte Bewegung erzeugt werden. Selbstverständlich können beliebige Aktuatoren vorgesehen sein, um eine derartige Bewegung oder eine ähnliche Bewegung auszuführen, die zu einer mechanischen Belastung und schließlich einem reißen der Kabelfolie 5 führt.

Beispielsweise kann auch, wie in Fig. 10 dargestellt, eine Rotationseinrichtung bzw. ein Exzenter 19 verwendet werden, um den zu bearbeitenden Kabelabschnitt A zu verdrehen. Die Darstellung der Fig. 10 ist in ihren Abmessungen übertrieben und lediglich schematisch zu verstehen.

Nach dem Abreißen wird die Kabelfolie 5 schließlich von dem zu bearbeitenden Kabelabschnitt A entfernt. Wenn, wie im Ausführungsbeispiel dargestellt, der abgeschnittene Kabelmantel 6 noch nicht vollständig von dem Kabel 1 entfernt wurde, kann die Kabelfolie 5 zusammen mit dem Kabelmantel 6 abgezogen werden (vgl. Fig. 7), da die Kabelfolie 5, je nach Ausführung, meist gut an dem Kabelmantel 6 haftet. Grundsätzlich kann die Kabelfolie 5 nach dem Einbringen des ringförmig umlaufenden Risses 11 von dem zu bearbeitenden Kabelabschnitt A allerdings auf beliebige Art und Weise entfernt werden, beispielsweise indem die Kabelfolie 5 abgebürstet, abgeblasen, abgewickelt und/oder abgestreift wird. Anschließend liegt die unter der Kabelfolie 5 befindliche Komponente des elektrischen Kabels 1 frei, vorliegend das Kabelschirmgeflecht 4.

Nachdem die Kabelfolie 5 entfernt ist, können weitere, übliche und bekannte Maßnahmen zur Konfektionierung oder zur weiteren Abisolation des elektrischen Kabels 1 vorgesehen sein (je nach Bedarf). In Fig. 8 ist beispielhaft und schematisch dargestellt, wie das freigelegte Kabelschirmgeflecht 4 nach hinten entlang der Kabelmittelachse M umgeschlagen wurde, um beispielsweise an einem (nicht dargestellten) Steckverbinder befestigt und mit diesem elektrisch verbunden zu werden. Nachfolgend könnte noch das Dielektrikum 3 entfernt und der Innenleiter 2 freigelegt und mit einem nicht dargestellten Steckverbinder kontaktiert werden.

Bei dem zu bearbeitenden Kabelabschnitt A kann es sich um ein bereits dargestelltes Kabelendstück handeln. Es kann sich aber auch um ein Kabelfenster handeln, wie in den Figuren 16 und 17 dargestellt. Ein Kabelfenster kann dabei auf bekannte Weise abisoliert werden, beispielsweise indem zwei ringförmig umlaufende Schnitte 8 und ein Längsschnitt 20 zwischen den ringförmigen Schnitten 8 in den Kabelmantel 6 eingebracht werden, wie in Fig. 16 angedeutet. Vorzugsweise erfolgen auch diese Verfahrensschritte automatisiert. Anschließend kann der Kabelmantel 6 entfernt werden, wodurch die im Ausführungsbeispiel darunter befindliche Kabelfolie 5 freiliegt. Schließlich können die bereits zuvor beschriebenen Schritte in analoger Weise durchgeführt werden, um die Kabelfolie 5 zu entfernen. Beispielsweise können in diesem Fall auch zwei Risspositionen R_{P} vorgesehen sein bzw. kann vorgesehen sein, dass die mechanische Belastbarkeit an zwei entlang der Kabelmittelachse M verteilt angeordneten Stellen zumindest teilringförmig, vollständig oder abschnittsweise umlaufend reduziert wird, wonach die Kabelfolie 5 zwischen den vorgesehenen Risspositionen R_{P} beispielsweise verdreht wird, wodurch diese an den vorgesehenen Risspositionen R_{P} abreißt. Der abgetrennte mittlere Abschnitt der Kabelfolie 5 kann infolge leicht entfernt werden, da dieser üblicherweise gewickelt ist und somit leicht abgezogen werden kann. Alternativ oder zusätzlich kann auch vorgesehen sein, die mechanische Belastbarkeit der Kabelfolie 5 entlang der Kabelmittelachse M zu reduzieren, wie in Fig. 17 durch die gestrichelt dargestellte Rissposition R_{P} angedeutet ist.

In Fig. 18 ist eine Vorrichtung 21 zum automatisierten Entfernen der Kabelfolie 5 von einem zu bearbeitenden Kabelabschnitt A eines elektrischen Kabels 1 schematisch und mit ihren wesentlichen Komponenten dargestellt. Grundsätzlich kann wenigstens ein Heizdraht 15, wenigstens ein Formwerkzeug 13, wenigstens eine Kältezufuhreinrichtung (nicht dargestellt), wenigstens eine Abziehhilfe 12, wenigstens eine Absaugeinrichtung (nicht dargestellt) und/oder wenigstens eine Zuführeinrichtung 16 für chemische Stoffe vorgesehen sein, um zumindest eine von der Kabelmittelachse M abgewandte Außenschicht 9 der im Bereich des zu bearbeitenden Kabelabschnitts A zumindest teilweise freigelegten Kabelfolie 5 zu behandeln, um die Kabelfolie 5 zu entfernen oder um zur Unterstützung der Entfernung der Kabelfolie 5 deren mechanische Belastbarkeit zumindest im Bereich der vorgesehenen Rissposition R_{P} zu reduzieren. Dabei können Mittel vorgesehen sein (beispielsweise wenigstens ein Linearaktuator 18 und/oder eine Rotationseinrichtung bzw. ein Exzenter 19), um den zu bearbeitenden Kabelabschnitt A zu verdrehen und/oder zu verbiegen.

Schließlich kann auch eine Schneideinrichtung 22 zum Einschneiden und gegebenenfalls zum Abziehen bzw. zum Teilabziehen des Kabelmantels 6 vorgesehen sein. Alle Komponenten können zustellbar ausgebildet sein, wie in Fig. 18 durch die jeweiligen Doppelpfeile angedeutet. Als Mittel zum Verdrehen und/oder Verbiegen des zu bearbeitenden Kabelabschnitts ist in Fig. 18 ein einzelner Linearaktuator 18 beispielhaft dargestellt, es können aber, wie vorstehend beschrieben, beliebig viele Aktuatoren beliebiger Bauart vorgesehen sein. Ferner ist eine Rolle 23 zum Abstreifen des geschnittenen Kabelmantels 6 dargestellt. Wenn die Kabelfolie 5 durch das Abstreifen des Kabelmantels 6 nicht oder nicht vollständig von dem Kabel 1 entfernt wird, kann beispielsweise auch eine Düse 24 vorgesehen sein, um die Kabelfolie 5 unter Verwendung von Druckluft von dem Kabel 1 abzublasen. Schließlich ist eine Kabelzuführeinrichtung 25 für das elektrische Kabel 1 vorgesehen.

Die Erfindung kann vorteilhaft innerhalb eines Systems 26 zum Konfektionieren von elektrischen Kabeln 1 vorgesehen sein. Ein System 26 zum Konfektionieren von elektrischen Kabeln 1 ist in Fig. 19 dargestellt. Dabei wird ein Endabschnitt eines Kabels 1 unter Verwendung mehrerer getaktet arbeitender Einrichtungen bzw. einer Vorrichtung nach dem erfindungsgemäßen Verfahren mit einem Steckverbinderteil 27 versehen. Das System 26 kann beispielsweise eine Einrichtung 28 zum Ablängen des Kabels 1, eine Einrichtung 29 zum Abmanteln und/oder Abisolieren verschiedener Schichten des Kabels 1, eine Einrichtung 30 zum Öffnen, Aufstellen und/oder Zurückstülpen eines Kabelschirmgeflechts 4, eine Einrichtung 31 zum Aufbringen und Kontaktieren eines Steckverbinderteils 27 und eine Vorrichtung 21 zum Entfernen einer Kabelfolie 5 gemäß den vorstehenden Ausführungen bzw. wie im Ausführungsbeispiel anhand der Figuren 1 bis 17 bzw. Figur 18 beschrieben, umfassen. Selbstverständlich können auch weitere Vorrichtungen oder die mehrfache Verwendung von Vorrichtungen innerhalb des Systems 26 vorgesehen sein. Die Reihenfolge der Bearbeitung des elektrischen Kabels 1 kann anwendungsbedingt variieren. Das dargestellte System 26 ist nur beispielhaft zu verstehen.

## Patentansprüche

1. Verfahren zum automatisierten Entfernen einer Kabelfolie (5) von einem zu bearbeitenden Kabelabschnitt (A) eines elektrischen Kabels (1), wobei die Kabelfolie (5) in dem zu bearbeitenden Kabelabschnitt (A) zumindest teilweise freigelegt wird, wonach im Bereich des zu bearbeitenden Kabelabschnitts (A) wenigstens ein ringförmig um die Kabelfolie (5) umlaufender Riss (11) in die Kabelfolie (5) eingebracht wird, wonach die Kabelfolie (5) von dem zu bearbeitenden Kabelabschnitt (A) entfernt wird, und wobei zum Einbringen des ringförmig umlaufenden Risses (11) zumindest die folgenden Schritte vorgesehen sind:
- Vorbearbeiten wenigstens einer der Kabelmittelachse (M) abgewandten Außenschicht (9) der Kabelfolie (5) zumindest im Bereich einer wenigstens teilringförmig umlaufenden vorgesehenen Rissposition (R_{P}), wobei die mechanische Belastbarkeit der Außenschicht (9) im Bereich der vorgesehenen Rissposition (R_{P}) durch die Vorbehandlung zumindest reduziert wird;
- Exzentrisches Verdrehen des zu bearbeitenden Kabelabschnitts (A) und/oder Verbiegen des zu bearbeitenden Kabelabschnitts (A) derart, dass eine unterhalb der vorbehandelten Außenschicht (9) befindliche Innenschicht (10) der Kabelfolie (5) teilringförmig oder ringförmig umlaufend einreißt.

2. Verfahren nach Anspruch 1,
**dadurch gekennzeichnet, dass**
die Kabelfolie (5) im Bereich der vorgesehenen Rissposition (R_{P}) im Zuge der Vorbearbeitung zumindest teilringförmig, vollständig oder abschnittsweise umlaufend entlang des Umfangs der Kabelfolie (5) geprägt und/oder perforiert wird.

3. Verfahren nach Anspruch 1 oder 2,
**dadurch gekennzeichnet, dass**
zur Entfernung oder zur Unterstützung der Entfernung der Kabelfolie (5) zumindest die Außenschicht (9) der Kabelfolie (5) im Bereich der vorgesehenen Rissposition (R_{P}) einer thermischen Behandlung unterzogen wird, wobei die Kabelfolie (5) hierzu unter Verwendung eines Lasers an- oder abgeschmolzen wird.

4. Verfahren nach einem der Ansprüche 1 bis 3,
**dadurch gekennzeichnet, dass**
der zu bearbeitende Kabelabschnitt (A) derart verbogen wird, dass die Kabelfolie (5) in der vorgesehenen Rissposition (Rₚ) teilringförmig einreißt, insbesondere um eine Sollbruchstelle in die Kabelfolie (5) einzubringen.

5. Verfahren nach einem der Ansprüche 1 bis 4,
**dadurch gekennzeichnet, dass**
der zu bearbeitende Kabelabschnitt (A) derart verdreht wird, dass die Kabelfolie (5) in der vorgesehenen Rissposition (Rₚ) ringförmig vollständig umlaufend einreißt, insbesondere durch Erweitern eines im Rahmen der Vorbearbeitung bereits eingebrachten, teilringförmigen Risses (11).

6. Verfahren nach einem der Ansprüche 1 bis 5,
**dadurch gekennzeichnet, dass**
der ringförmig umlaufende Riss (11) an der vorgesehenen Rissposition (R_{P}) derart in die Kabelfolie (5) eingebracht wird, dass sich der Riss (11) durch die Außenschicht (9) und die Innenschicht (10) der Kabelfolie (5) erstreckt.

7. Verfahren nach einem der Ansprüche 1 bis 6,
**dadurch gekennzeichnet, dass**
als Kabelfolie (5) eine Verbundfolie aus wenigstens zwei Einzelschichten verwendet wird, wobei die Innenschicht (10) aus wenigstens einer der Einzelschichten und die Außenschicht (9) aus der oder den weiteren Einzelschichten gebildet ist.

8. Verfahren nach einem der Ansprüche 1 bis 7,
**dadurch gekennzeichnet, dass**
der zu bearbeitende Kabelabschnitt (A) ein Endabschnitt des elektrischen Kabels (1) ist.

9. Verfahren nach einem der Ansprüche 1 bis 8,
**dadurch gekennzeichnet, dass**
die Kabelfolie (5) von dem zu bearbeitenden Kabelabschnitt (A) entfernt wird, indem die Kabelfolie (5) abgeblasen wird.

10. Vorrichtung (21), eingerichtet zur Durchführung eines Verfahrens gemäß einem der Ansprüche 1 bis 9, zum automatisierten Entfernen einer Kabelfolie (5) von einem zu bearbeitenden Kabelabschnitt (A) eines elektrischen Kabels (1), wobei wenigstens ein Formwerkzeug (13) oder ein Laser vorgesehen ist, um zumindest eine von der Kabelmittelachse (M) abgewandte Außenschicht (9) der im Bereich des zu bearbeitenden Kabelabschnitts (A) zumindest teilweise freigelegten Kabelfolie (5) zu behandeln, um zur Unterstützung der Entfernung der Kabelfolie (5) deren mechanische Belastbarkeit zumindest zu reduzieren,
**dadurch gekennzeichnet, dass**
Mittel (18, 19) vorgesehen sind, um den zu bearbeitenden Kabelabschnitt (A) derart zu verbiegen und/oder derart exzentrisch zu verdrehen, dass eine unterhalb der vorbehandelten Außenschicht (9) befindliche Innenschicht (10) der Kabelfolie (5) teilringförmig oder ringförmig umlaufend einreißt.

11. Vorrichtung (21) nach Anspruch 10,
**dadurch gekennzeichnet, dass**
als Mittel, um den zu bearbeitenden Kabelabschnitt (A) zu verdrehen und/oder oder entlang wenigstens eines Freiheitsgrades zu verbiegen, einer oder mehrere Aktuatoren (18) verwendet werden.

12. Vorrichtung (21) nach Anspruch 10 oder 11,
**dadurch gekennzeichnet, dass**
als Mittel, um den zu bearbeitenden Kabelabschnitt (A) zu verdrehen und/oder oder entlang wenigstens eines Freiheitsgrades zu verbiegen, ein Exzenter (19) verwendet wird.

13. Vorrichtung (21) nach einem der Ansprüche 10 bis 12,
**gekennzeichnet durch**
eine Kabelzuführeinrichtung (25) für die Zuführung des elektrischen Kabels (1) an die Mittel (18, 19) entlang einer Zuführrichtung.

14. Vorrichtung (21) nach Anspruch 13,
**dadurch gekennzeichnet, dass**
die Kabelzuführeinrichtung (25) an das elektrische Kabel (1) zustellbar ist.

15. System (26) zum Konfektionieren von elektrischen Kabeln (1), umfassend eine Einrichtung (28) zum Ablängen des elektrischen Kabels (1) und/oder eine Einrichtung (29) zum Abmanteln und/oder Abisolieren verschiedener Schichten des elektrischen Kabels (1) und/oder eine Einrichtung (30) zum Öffnen, Aufstellen und/oder Zurückstülpen eines Kabelschirmgeflechts (4) und/oder eine Einrichtung (31) zum Aufbringen und Kontaktieren eines Steckverbinderteils (27) sowie eine Vorrichtung (21) zum automatisierten Entfernen einer Kabelfolie (5) gemäß einem der Ansprüche 10 bis 14.

## Claims

1. Method for automatically removing a cable foil (5) from a cable portion (A) to be processed of an electrical cable (1), wherein the cable foil (5) is at least partially exposed in the cable portion (A) to be processed, after which, in the region of the cable portion (A) to be processed, at least one crack (11) encircling the cable foil (5) in the shape of a ring is introduced into the cable foil (5), after which the cable foil (5) is removed from the cable portion (A) to be processed, and wherein at least the following steps are provided for introducing the encircling crack (11) in the shape of a ring:
- pre-processing at least one outer layer (9) of the cable foil (5) facing away from the cable centre axis (M) at least in the region of an intended crack position (R_{P}) running around at least partially annularly, wherein the mechanical load-bearing capacity of the outer layer (9) in the region of the intended crack position (R_{P}) is at least reduced by the pre-processing;
- eccentrical twisting of the cable portion (A) to be processed and/or bending of the cable portion (A) to be processed in such a way that an inner layer (10) of the cable foil (5) located underneath the pre-processed outer layer (9) cracks in a partially annular or annularly circumferential manner.

2. Method according to claim 1,
**characterised in that**
the cable foil (5) is embossed and/or perforated in the region of the intended crack position (R_{P}) in the course of the pre-processing at least partially annularly, completely or in portions circumferentially along the circumference of the cable foil (5).

3. Method according to claim 1 or 2,
**characterised in that**
at least the outer layer (9) of the cable foil (5) is subjected to a thermal treatment in the region of the intended crack position (R_{P}) for the purpose of removing or assisting the removal of the cable foil (5), the cable foil (5) being melted on or off using a laser for this purpose.

4. Method according to one of claims 1 to 3,
**characterised in that**
the cable portion (A) to be processed is bent in such a way that the cable foil (5) cracks in a partial ring shape in the intended crack position (R_{P}), in particular in order to introduce a predetermined breaking point into the cable foil (5).

5. Method according to one of claims 1 to 4,
**characterised in that**
the cable portion (A) to be processed is twisted in such a way that the cable foil (5) cracks completely around the circumference in the intended crack position (R_{P}), in particular by expanding a partial annular crack (11) already introduced during pre-processing.

6. Method according to one of claims 1 to 5,
**characterised in that**
the encircling crack (11) in the shape of a ring is introduced into the cable foil (5) at the intended crack position (R_{P}) in such a way that the crack (11) extends through the outer layer (9) and the inner layer (10) of the cable foil (5).

7. Method according to one of claims 1 to 6,
**characterised in that**
the cable foil (5) used is a composite foil of at least two individual layers, wherein the inner layer (10) is formed from at least one of the individual layers and the outer layer (9) is formed from the further individual layer or layers.

8. Method according to one of claims 1 to 7,
**characterised in that**
the cable portion (A) to be processed is an end portion of the electrical cable (1).

9. Method according to one of claims 1 to 8,
**characterised in that**
the cable foil (5) is removed from the cable portion (A) to be processed by blowing off the cable foil (5).

10. Apparatus (21), set up for carrying out a method according to one of claims 1 to 9, for the automated removal of a cable foil (5) from a cable portion (A) of an electrical cable (1) to be processed, wherein at least one forming tool (13) or a laser is provided, in order to treat at least one outer layer (9), facing away from the cable centre axis (M), of the cable foil (5) which is at least partially exposed in the region of the cable portion (A) to be processed, in order to at least reduce the mechanical load-bearing capacity of the cable foil (5) in order to support the removal of the cable foil (5),
**characterised in that**
means (18, 19) are provided for bending and/or eccentrically twisting the cable portion (A) to be processed in such a way that an inner layer (10) of the cable foil (5) located underneath the pre-processed outer layer (9) cracks in a partially annular or annularly circumferential manner.

11. Apparatus (21) according to claim 10,
**characterised in that**
one or more actuators (18) are used as the means for twisting and/or bending the cable portion (A) to be processed along at least one degree of freedom.

12. Apparatus (21) according to claim 10 or 11,
**characterised in that**
an eccentric (19) is used as the means for twisting and/or bending the cable portion (A) to be processed along at least one degree of freedom.

13. Apparatus (21) according to one of claims 10 to 12,
**characterised by**
a cable feeding device (25) for feeding the electric cable (1) to the means (18, 19) along a feeding direction.

14. Apparatus (21) according to claim 13,
**characterised in that**
the cable feed device (25) can be fed to the electric cable (1).

15. System (26) for manufacturing electric cables (1), comprising a device (28) for cutting the electric cable (1) to length and/or a device (29) for stripping and removing the insulation from various layers of the electric cable (1) and/or a device (30) for opening, positioning and/or turning back a cable shielding braid (4) and/or a device (31) for attaching and making contact with a plug connector part (27), and also an apparatus (21) for automatically removing a cable foil (5) according to one of claims 10 to 14.

## Revendications

1. Procédé pour l'enlèvement automatisé d'une feuille de câble (5) d'une section de câble à traiter (A) d'un câble électrique (1), dans lequel la feuille de câble (5) est au moins partiellement exposée dans la section de câble à traiter (A), dans lequel au moins une déchirure (11) qui s'étend de façon annulaire autour de la feuille de câble (5) est alors pratiquée dans la feuille de câble (5) dans la région de la section de câble à traiter (A), dans lequel la feuille de câble (5) est ensuite enlevée de la section de câble à traiter (A), et dans lequel, pour pratiquer la déchirure (11) qui s'étend de façon annulaire, au moins les étapes suivantes sont exécutées :
- prétraiter au moins une couche extérieure (9) de la feuille de câble (5) opposée à l'axe central de câble (M) au moins dans la région d'une position de déchirure prévue (R_{P}) qui s'étend d'une façon au moins partiellement annulaire, dans lequel la capacité de charge mécanique de la couche extérieure (9) dans la région de la position de déchirure prévue (R_{P}) est au moins réduite par le prétraitement ; et
- effectuer une torsion excentrique de la section de câble à traiter (A) et/ou plier la section de câble à traiter (A) de telle sorte qu'une couche intérieure (10) de la feuille de câble (5) qui se trouve en dessous de la couche extérieure (9) prétraitée se déchire de façon partiellement annulaire ou circulaire.

2. Procédé selon la revendication 1, **caractérisé en ce que** la feuille de câble (5) est gaufrée et/ou perforée dans la région de la position de déchirure prévue (R_{P}) au cours du prétraitement, de façon au moins partiellement annulaire, complètement ou par sections sur la totalité de la circonférence de la feuille de câble (5).

3. Procédé selon la revendication 1 ou 2, **caractérisé en ce que**, pour enlever ou aider à enlever la feuille de câble (5), au moins la couche extérieure (9) de la feuille de câble (5) est soumise à un traitement thermique dans la région de la position de déchirure prévue (R_{P}), et dans lequel la feuille de câble (5) est fondue à cet effet en utilisant un laser.

4. Procédé selon l'une quelconque des revendications 1 à 3, **caractérisé en ce que** la section de câble à traiter (A) est déformée de telle sorte que la feuille de câble (5) se déchire de façon partiellement annulaire dans la position de déchirure prévue (R_{P}), en particulier dans le but de créer un point destiné à la rupture dans la feuille de câble (5).

5. Procédé selon l'une quelconque des revendications 1 à 4, **caractérisé en ce que** la section de câble à traiter (A) est tordue de telle sorte que la feuille de câble (5) se déchire de façon annulaire sur la totalité de sa circonférence dans la position de déchirure prévue (R_{P}), en particulier en élargissant une déchirure (11) partiellement annulaire déjà réalisée dans le cadre du prétraitement.

6. Procédé selon l'une quelconque des revendications 1 à 5, **caractérisé en ce que** la déchirure annulaire périphérique (11) est réalisée dans la feuille de câble (5) au niveau de la position de déchirure prévue (R_{P}) de telle sorte que la déchirure (11) s'étende à travers la couche extérieure (9) et la couche intérieure (10) de la feuille de câble (5).

7. Procédé selon l'une quelconque des revendications 1 à 6, **caractérisé en ce qu'**une feuille composite constituée d'au moins deux couches individuelles est utilisée comme feuille de câble (5), dans lequel la couche intérieure (10) est constituée d'au moins une des couches individuelles et la couche extérieure (9) est constituée de l'autre ou des autres couche(s) individuelle(s).

8. Procédé selon l'une quelconque des revendications 1 à 7, **caractérisé en ce que** la section de câble à traiter (A) est une partie d'extrémité du câble électrique (1).

9. Procédé selon l'une quelconque des revendications 1 à 8, **caractérisé en ce que** la feuille de câble (5) est enlevée de la section de câble à traiter (A) en soufflant sur la feuille de câble (5).

10. Dispositif (21) conçu de manière à mettre en oeuvre un procédé selon l'une quelconque des revendications 1 à 9 pour enlever de façon automatisée une feuille de câble (5) d'une section de câble à traiter (A) d'un câble électrique (1), dans lequel au moins un outil de formage (13) ou un laser est prévu pour traiter au moins une couche extérieure (9), opposée à l'axe central (M) du câble, de la feuille de câble (5) qui est au moins partiellement exposée dans la région de la section de câble à traiter (A) dans le but d'au moins réduire sa capacité de charge mécanique en vue de faciliter l'enlèvement de la feuille de câble (5), **caractérisé en ce que** des moyens (18, 19) sont prévus pour plier et/ou pour tordre de façon excentrique la section de câble à traiter (A) de telle sorte qu'une couche intérieure (10) de la feuille de câble (5) qui se trouve en dessous de la couche extérieure (9) prétraitée se déchire de façon partiellement annulaire ou circulaire.

11. Dispositif (21) selon la revendication 10, **caractérisé en ce qu'**un ou plusieurs actionneur(s) (18) est/sont utilisé(s) comme moyen(s) pour exécuter la torsion et/ou le pliage de la section de câble à traiter (A) suivant au moins un degré de liberté.

12. Dispositif (21) selon la revendication 10 ou 11, **caractérisé en ce qu'**un excentrique (19) est utilisé comme moyen pour exécuter la torsion et/ou le pliage de la section de câble à traiter (A) suivant au moins un degré de liberté.

13. Dispositif (21) selon l'une quelconque des revendications 10 à 12, **caractérisé par** un dispositif d'alimentation de câble (25) pour amener le câble électrique (1) aux moyens (18, 19) suivant une direction d'alimentation.

14. Dispositif (21) selon la revendication 13, **caractérisé en ce que** le dispositif d'alimentation de câble (25) peut être raccordé au câble électrique (1).

15. Système (26) pour assembler des câbles électriques (1), comprenant un dispositif (28) de mise à longueur du câble électrique (1) et/ou un dispositif (29) de dégainage et/ou de dénudage de différentes couches du câble électrique (1) et/ou un dispositif (30) d'ouverture, de mise en place et/ou de retournement d'une tresse de blindage de câble (4) et/ou un dispositif (31) de mise en place et de mise en contact d'une partie de connecteur (27), ainsi qu'un dispositif (21) d'enlèvement automatisé d'une feuille de câble (5) selon l'une quelconque des revendications 10 à 14.
